# EUROPÄISCHE PATENTSCHRIFT

(11) **EP 4 378 662 B1**
(45) Veröffentlichungstag und Bekanntmachung des Hinweises auf die Patenterteilung: **30.04.2025**
(21) Anmeldenummer: 23191741.0
(22) Anmeldetag: 16.08.2023
(51) Int. Cl.: B29C 53/58, B29C 53/60, B29C 53/82, B29C 53/84

(54) **VERFAHREN UND VORRICHTUNG ZUR HERSTELLUNG GEWICKELTER ROHRE AUS KUNSTSTOFF, INSBESONDERE VON SPALTROHREN FÜR NASSLÄUFERPUMPEN**
METHOD AND DEVICE FOR PRODUCING WOUND PLASTIC TUBES, ESPECIALLY SPLIT TUBES FOR WET ROTOR PUMPS
PROCÉDÉ ET DISPOSITIF POUR LA FABRICATION DE TUBES ENROULÉS EN MATIÈRE PLASTIQUE, EN PARTICULIER DE TUBES D'ENTREFER POUR POMPES À ROTOR HUMIDE

(30) Priorität: 04.12.2022 LU 503129
(43) Veröffentlichungstag der Anmeldung: 05.06.2024
(73) Patentinhaber: WILO SE, 44263 Dortmund (DE)
(72) Erfinder: Küster, Bernd, 44263 Dortmund (DE); Barth, Dennis, 44263 Dortmund (DE); Schüler, Holger, 44263 Dortmund (DE)
(74) Vertreter: Cohausz Hannig Borkowski Wißgott

(56) Entgegenhaltungen:
- EP-A1- 3 835 040
- WO-A1-2022/248598

## Beschreibung

Die Erfindung betrifft ein Verfahren und eine Vorrichtung zur Herstellung gewickelter Rohre aus Kunststoff, insbesondere von Spaltrohren für Nassläuferpumpen, durch Wickeln eines flachen, faserverstärkten Bandmaterials mit einer thermoplastischen oder duroplastischen Polymer-Matrix auf einen aufgeheizten Wickelkern während die Polymer-Matrix für einen Stoffschluss zweier übereinanderliegender Lagen des Bandmaterials mittels Laserbestrahlung aufgeschmolzen wird. Die Vorrichtung besitzt entsprechend einen beheizbaren Wickelkern und einen das Bandmaterial bereitstellenden Wickelkopf, der eingerichtet ist, das Bandmaterial auf den Wickelkern zu wickeln und der einen Laser aufweist, um die Polymer-Matrix mittels Laserbestrahlung aufzuschmelzen.

Die europäische Patentanmeldung EP3835040A1 offenbart ein Spaltrohr für eine Nassläuferpumpe, das aus einem gewickelten, endlosfaserverstärkten Kunststoffrohr besteht. Das Kunststoffrohr weist innenseitig eine permeationsmindernde polymerbasierte Beschichtung auf, wobei eine chemische Bindung zwischen dem Kunststoffrohr und der Beschichtung besteht.

Außerdem ist das Herstellen von Rohren durch Aufwickeln eines flachen, faserverstärkten Bandmaterials, im Fachjargon auch als Tape bezeichnet, auf einen heißen Wickelkern bei gleichzeitiger Laserbestrahlung (Laser-Tape-Winding) an sich bekannt. Die Verwendung eines heißen Wickelkerns dient der Sicherstellung, dass die Polymer-Matrix des Tapes im Falle eines Thermoplasts vollständig kristallisiert oder im Falle eines wärmehärtenden Duroplasts vollständig vernetzt. Dies ist allerdings nur dann der Fall, wenn eine bestimmte Mindesttemperatur für die Kristallisation bzw. Vernetzung ausreichend lange besteht, was in der Praxis nach dem Stand der Technik nicht gewährleistet ist. Dies führt dazu, dass die Polymer-Matrix der hergestellten Rohre nicht vollständig kristallisiert oder vernetzt ist und deshalb beim Abkühlen schrumpft. Die dauerhafte Maßhaltigkeit des gewickelten Rohres ist somit nicht gegeben. Es gibt hohe Toleranzen, und entlang ihres Umfangs und ihrer axialen Länge haben die Rohre inhomogene Eigenschaften.

Das Aufheizen des Wickelkerns erfolgt in aufwändiger Weise örtlich getrennt von der Wickelvorrichtung in einem Ofen oder mittels Infrarotstrahler was zu einer langen Aufheizzeit und damit zu einer langen Wartezeit führt. Nachteilig hieran ist außerdem einerseits die komplizierte und gefährliche Handhabung beim Transport und der Anordnung des heißen Wickelkerns in der Wickelvorrichtung. Andererseits kühlt der Wickelkern bei dieser Handhabung bereits ab, so dass bei Wickelbeginn bereits erheblich erkaltet ist. Ferner erfolgt die Abkühlung des Wickelkerns zumeist zu schnell, so dass die für die Kristallisation bzw. Vernetzung der Polymer-Matrix erforderliche Mindesttemperatur nicht lange genug anliegt. Um dies zu gewährleisten, wird die Aufheiztemperatur für den Wickelkern so hoch gewählt, dass der Kern auch nach einer bestimmten Dauer noch immer die Mindesttemperatur besitzt. Hierfür ist ein hoher Energiebedarf erforderlich. Andererseits werden massive Wickelkerne, d.h. solche aus Vollmaterial eingesetzt, da sie eine hohe Wärmespeicherkapazität aufweisen. Dadurch sind die Wickelkerne jedoch besonders schwer, was ebenfalls die Handhabung erschwert.

In der Praxis ergibt sich außerdem keine homogene Temperaturverteilung auf der Oberfläche und im Inneren des Wickelkerns. Die Temperaturverteilung ist außerdem in zeitlicher Hinsicht unkontrolliert.

Ein weiteres Problem ist der erhebliche Verschleiß des Wickelkerns, der durch das Herunterschieben des Rohres vom Wickelkern nach dem Wickeln entsteht, wenn der Wickelkern noch vergleichsweise heiß ist. Denn zwischen dem Wickelkern und dem gewickelten Rohr bestehen in diesem Zustand hohe Reibungskräfte. Dies beeinträchtigt ebenfalls die Maßhaltigkeit der Rohre und nicht selten kommt es zu einer Beschädigung des Rohres, so dass eine hohe Ausschussrate vorliegt. Der hohe Verschleiß führt zu einer häufigen, kostenintensiven Erneuerung der Wickelkerne.

Anders liegt der Fall, wenn der Wickelkern vollständig abgekühlt ist, da sein Durchmesser in diesem Zustand geringer ist und dies das Herunterschieben des Rohres vom Kern erleichtert, jedenfalls sofern es nicht ebenfalls geschrumpft ist und somit weiterhin fest auf dem Wickelkern aufliegt. Bis der Wickelkern vollständig abgekühlt ist, dauert es jedoch lange, was die Prozesszeit erhöht.

Es ist ferner bekannt, die Länge der Wickelkerne so zu bemessen, dass lange Rohre gewickelt werden können, von denen anschließend, örtlich von der Wickelvorrichtung getrennt, Rohrstücke gewünschter Länge abgeschnitten werden. Beispielsweise bildet erst ein solches, abgeschnittenes Rohrstück ein gewünschtes Spaltrohr. Es versteht sich von selbst, dass das Herunterschieben des gewickelten Rohres vom Wickelkern aufgrund der Länge des Rohres herausfordernd ist. Zum einen wird ein erhöhter Platzbedarf benötigt. Zum anderen führt das Herunterschieben eines langen Rohres verstärkt zu einem Verschleiß der Kernoberfläche und nicht selten zu einer Beschädigung des Rohres. Aus diesem Grund werden die Rohre in der Praxis nicht allzu lang gewickelt, was die Produktivität der Wickelvorrichtung und des Verfahrens reduziert und limitiert.

Es ist deshalb Aufgabe der vorliegenden Erfindung, ein Wickelverfahren und eine Wickelvorrichtung zur Herstellung von Kunststoffrohren bereitzustellen, das bzw. die die genannten Nachteile überwindet und eine einfache und wirtschaftliche Herstellung, maßhaltiger Kunststoffrohre oder Rohrabschnitte bei gleichzeitiger Verringerung des Energiebedarfs und des Ausschusses ermöglicht.

Diese Aufgabe wird durch ein Verfahren nach Anspruch 1 und eine Vorrichtung nach Anspruch 8 gelöst. Vorteilhafte Weiterbildungen sind in den jeweiligen Unteransprüchen angegeben und werden nachfolgende erläutert.

Erfindungsgemäß ist bei dem Verfahren vorgesehen, dass der Wickelkern ein Außenrohr, auf das das Bandmaterial wickelbar ist bzw. gewickelt wird, und ein darin angeordnetes Innenrohr aufweist, und dass zur variothermen Temperierung des Außenrohres ein Fluid den Wickelkern axial entlang eines helikalen Strömungspfades um die Wickelkernachse durchströmt, der sich radial zwischen dem Außenrohr und dem Innenrohr entlang zumindest eines axialen Abschnitts des Wickelkerns erstreckt, so dass das Fluid entlang der Innenseite des Außenrohres strömt und somit seine Wärme auf das Außenrohr übertragen oder Wärme vom Außenrohr aufnehmen kann. Vorzugsweise erstreckt sich der helikale Strömungspfad nicht nur entlang zumindest eines axialen Abschnitts des Wickelkerns, sondern nahezu entlang der gesamten axialen Länge des Wickelkerns, insbesondere des Innenrohres.

Bei der erfindungsgemäßen Vorrichtung ist vorgesehen, dass radial zwischen dem Außenrohr und dem Innenrohr wenigstens eine Wendel vorhanden ist, die sich entlang zumindest eines axialen Abschnitts des Wickelkerns erstreckt und den vom Fluid durchströmbaren helikalen Strömungspfad um die Wickelkernachse definiert. Die Wendel bildet eine sich radial zwischen dem Außenrohr und dem Innenrohr erstreckende Wand, die den helikalen Strömungspfad in axialer Richtung begrenzt. Die Wendel trennt somit eine erste Windung des helikalen Strömungspfads von der benachbarten nächsten Windung des helikalen Strömungspfads.

Der vorgeschlagene Aufbau des Wickelkerns hat viele Vorteile. So ist beispielsweise das Außenrohr gegenüber einem konventionellen Wickelkern hohl. Die Materialkosten sind damit geringer und der Wickelkern leichter, was seine Handhabung vereinfacht.

Der Aufbau ermöglicht ferner dessen Temperierung direkt in der Vorrichtung, so dass kein Transport des Wickelkerns von einem Ort, an dem er aufgeheizt wird, zur Wickelvorrichtung erfolgen muss. Von großem Vorteil ist dabei, dass der Strömungspfad im Wickelkern sowohl zum Aufheizen als auch zum Kühlen des Wickelkerns verwendet werden kann, indem das Fluid eine entsprechende Temperatur aufweist. Dies wird als variotherme Temperierung bezeichnet. Der technische Aufwand zum Aufheizen bzw. Kühlen des Wickelkerns ist somit gering.

Beispielsweise kann das Fluid den Wickelkern beim Wickeln mit einer ersten Temperatur in einem ersten Temperaturbereich durchströmen. Die erste Temperatur liegt sinnvollerweise über der Mindesttemperatur, die zur Kristallisierung oder Vernetzung der Polymer-Matrix erforderlich ist, vorzugsweise zwischen 120°C und 200°C. Anschließend kann das Fluid den Wickelkern mit einer zweiten Temperatur in einem zweiten Temperaturbereich, insbesondere zwischen 10°C und 80°C, durchströmen, je nach Material des Bandmaterials. Dies ermöglicht ein schnelles Aufheizen des Wickelkerns für den Wickelvorgang, und nach diesem auch ein schnelles aktives Abkühlen des Wickelkerns. Durch das Abkühlen schrumpft das zuvor wärmebedingt gedehnte Außenrohr, so dass sich das gewickelte Rohr dann leicht und annährend verschleißfrei vom Wickelkern schieben lässt.

Um eine einfache Umschaltung zwischen Heizen und Kühlen des Wickelkerns zu ermöglichen, kann die Vorrichtung eine Temperiereinrichtung umfassen, die eingerichtet ist, das Fluid wahlweise mit der ersten Temperatur oder mit der zweiten Temperatur bereitzustellen. Die Temperiereinrichtung ermöglicht außerdem eine genaue Vorgabe der zeitlichen Dauer, für die die erste und/ oder zweite Temperatur vorliegen soll. Somit kann sichergestellt werden, dass die Kristallisierung oder Vernetzung der Polymer-Matrix vollständig erfolgt. Insgesamt wird damit die Prozesssicherheit und Prozessstabilität verbessert. Die Temperiereinrichtung liefert somit je nach Bedarf heißes oder kaltes Fluid an den Wickelkern.

Die Temperiereinrichtung kann beispielsweise ein erstes Reservoir an Fluid mit der ersten Temperatur, gegebenenfalls auch ein zweites Reservoir an Fluid mit der zweiten Temperatur aufweisen. Dem ersten Reservoir kann eine Heizeinrichtung zugeordnet sein, um das im ersten Reservoir befindliche Fluid aufzuheizen. Dem zweiten Reservoir kann eine Kühleinrichtung zugeordnet sein, um das im zweiten Reservoir befindliche Fluid zu kühlen. Die beiden Reservoire können jeweils über ein Ventil oder ein gemeinsames 3-Wege-Ventil mit einer Zuführungsleitung verbunden sein, die mit dem Wickelkern verbunden ist, um das entsprechende Fluid dort einzuleiten.

Es sei klargestellt, dass das zum Aufheizen des Wickelkerns verwendete Fluid mit der ersten Temperatur in stofflicher Hinsicht nicht zwingend identisch sein muss zu dem zum Kühlen des Wickelkerns verwendeten Fluids. Dies ist jedoch aufgrund des gemeinsam genutzten Strömungspfad sinnvoll. Beispielsweise kann das Fluid Wasser oder Glykol oder ein Gemisch aus Wasser und Glykol sein.

Ein Vorteil der helixförmigen Führung der Strömung um das Innenrohr besteht darin, dass der Strömungsquerschnitt gegenüber einer geraden Durchströmung vergrößert wird, und damit die Strömungsgeschwindigkeit verringert wird. Die Wegstrecke verlängert sich dadurch um die Anzahl der Windungen. Die Widerstandszahl des helixförmigen Strömungspfades ist gegenüber einer laminaren, axialen Durchströmung eines Ringspalts zwischen dem Außenrohr und dem Innenrohr verringert. Geringere Widerstandszahl und geringere Geschwindigkeit führt zu einem geringeren Druckverlust entlang des helixförmigen Strömungspfades. Durch die geringere Geschwindigkeit und die längere Wegstrecke ist die Aufenthaltszeit eine Fluidteilchens im Strömungspfad größer. Dadurch kann der Wärmeübergang zeitlich gesehen optimiert werden und man erhält eine gleichförmigere Temperaturverteilung, insbesondere für die relevante Temperatur des Außenrohres bzw. der Wickelkernoberfläche, die mit dem Bandmaterial als Wickelgut in Kontakt kommt.

Insgesamt bewirkt der helixförmige Strömungspfad eine homogene Temperaturverteilung auf der Außenoberfläche des Außenrohres, und zwar sowohl in Umfangsrichtung als auch in axialer Richtung des Wickelkerns. Somit herrscht eine konstante Temperatur über der gesamten Wickellänge.

Beim Bewickeln wird das Bandmaterial Lage für Lage auf den Wickelkern gelegt. Um besonders dünnwandige Rohre, insbesondere Spaltrohre, herzustellen, genügen bereits zwei oder drei Lagen. Für Rohre dickerer Wandstärke können auch mehr Lagen vorhanden sein.

Vorzugsweise ist das Bandmaterial thermoplastisch und unidirektional (UD) faserverstärkt, d.h. es bildet ein sogenanntes UD-Tape. Dies eignet sich besonders für die Herstellung dünnwandiger Spaltrohre für Nassläuferpumpen, die von dem gewickelten Rohr abgeschnitten werden können.

Als Faserverstärkung im Bandmaterial können bevorzugt Kohlefasern verwendet werden. Somit ist das gewickelte Rohr ein CFK-Wickelrohr (Carbon-Faser-Verstärkt).

Die Polymer-Matrix des Bandmaterials kann beispielsweise PPS (Polyphenylensulfid), PPA (Polyphthalamide), PEKK (Polyetherketonketon) oder PEEK (Polyetheretherketon) sein.

Eine einfache Konstruktion der Vorrichtung wird erreicht, wenn der Wickelkern zum Aufbringen der Lagen, d.h. während des Wickelns, um seine Längsachse rotiert. Somit kann der Wickelkopf hinsichtlich seiner Winkellage bezogen auf den Wickelkern stationär bleiben. Das Bandmaterial wird dann tangential in konstantem Winkel zum Wickelkern zugeführt. Vorzugsweise wird der Wickelkopf kontinuierlich linear und parallel zur Wickelkernachse verfahren, damit aufeinander folgende Lagen des Bandmaterials axial zueinander versetzt sind.

In einer einfachen Ausführungsvariante kann vorgesehen sein, dass das Fluid an einem ersten axialen Ende des Wickelkerns in diesen eintritt, den helikalen Strömungspfad durchfließt und am gegenüberliegenden zweiten axialen Ende wieder austritt. In diesem Fall kann eine Rückführung des Fluids zur Temperiereinrichtung außerhalb des Wickelkerns liegen.

In einer bevorzugten anderen Ausführungsvariante kann vorgesehen sein, dass das Fluid zwar an einem ersten axialen Ende des Wickelkerns in diesen eintritt und den helikalen Strömungspfad durchfließt, jedoch am gegenüberliegenden zweiten axialen Ende und/ oder vorher radial umgelenkt wird und durch den Wickelkern auch wieder zurückfließt. Dies ist dank der Anordnung des Innenrohres im Außenrohr möglich, wodurch der Wickelkern im radialen Querschnitt betrachtet ein Zweikammersystem bildet. Dabei bildet der helikale Strömungspfad eine Außenkammer und das Innere des Innenrohres eine Innenkammer. Die Außenkammer und die Innenkammer werden bidirektional, genauer gesagt in entgegengesetzten Richtungen durchströmt. Der Vorteil dieser Variante besteht darin, dass die Zuführung und die Abführung des Fluids am selben axialen Ende des Wickelkerns liegt, was die Vorrichtung baulich vereinfacht. Mit anderen Worten ist in dieser Ausführungsvariante vorgesehen, das Fluid das Innenrohr in axial entgegengesetzte Richtung zum helikalen Strömungspfad durchströmt, wobei das Fluid durch wenigstens eine Fluidumlenkung, die in Strömungsrichtung am Ende des axialen Abschnitts oder jenseits dieses Endes, beispielsweise am axialen Ende des Wickelkerns liegt, vom Innenrohr zum helikalen Strömungspfad oder umgekehrt umgelenkt wird.

Der Aufbau und die bestimmungsgemäße Verwendung des Wickelkerns dieser Ausführungsvariante entspricht somit einem Gegenstrom-Wärmetauscher-Prinzip anstelle eines massiven Kerns.

Die Fluidumlenkung kann auf unterschiedliche Weise realisiert werden. Beispielsweise kann das Innenrohr gemäß einer ersten Variante eine oder mehrere Querkanäle, beispielsweise Querbohrungen aufweisen, die eine Verbindung zwischen dem Inneren des Innenrohrs und dem helikalen Strömungspfad schaffen. Ein solcher Querkanal hat den Vorteil, dass sie auf einer beliebigen axialen Höhe entlang der axialen Erstreckung des Wickelkerns liegen kann. In einer anderen Ausgestaltung kann das Innenrohr gegenüber dem Außenrohr verkürzt sein, so dass Fluid axial aus dem Innenrohr heraus- oder in dieses hineinströmt, je nach Strömungsrichtung. In diesem Fall liegt die Fluidumlenkung an dem dem Strömungseintritt des Fluids gegenüberliegenden axialen Ende des Wickelkerns. In beiden genannten Varianten ist der Wickelkern, genauer gesagt das Außenrohr durch ein Verschlusselement dicht verschlossen, damit kein Fluid austritt. Bei der ersten Variante ist geeigneterweise auch das Innenrohr axial verschlossen, vorzugsweise durch dasselbe Verschlusselement.

Gemäß einer die zweite Variante weiterbildende dritte Variante kann die Fluidumlenkung in dem Verschlusselement erfolgen, da folglich als Fluidumlenker fungiert. So kann die Vorrichtung einen Fluidumlenker aufweisen, der an dem dem Strömungseintritt des Fluids gegenüberliegenden axialen Ende des Wickelkerns in der Art eines Stopfens in das Innenrohr und in das Außenrohr eingesetzt ist und dieses jeweils verschließt, gleichzeitig aber wenigstens einen Querkanal aufweist, um den Übergang des Fluids vom Innenrohr zum helikalen Strömungspfad oder umgekehrt zu ermöglichen. Der wenigstens eine Querkanal kann in einem rohrförmigen Abschnitt des Fluidumlenkers ausgebildet sein, der von einem stopfenförmigen Abschnitt axial vorspringt und mit einem freien Ende nur soweit in das Innenrohr hineinragt, das der wenigstens eine Querkanal ungehindert durchströmt werden kann. Der stopfenförmige Abschnitt kann in dem Außenrohr axial eingeschoben sein und dieses dichtend verschließen.

Es ist von Vorteil, wenn das Fluid zunächst das Innenrohr durchströmt und anschließend durch den helikalen Strömungspfad zurückströmt. Dies homogenisiert gegenüber der umgekehrten Strömungsrichtung die Temperaturverteilung im Wickelkern und maximiert den Nutzungsgrad der vom Fluid gelieferten thermischen Energie. Denn entlang des Gesamtströmungspfads verliert das Fluid zunehmend an Wärme. Dies ist besonders entlang des helikalen Strömungspfades merklich, weil das Fluid seine Wärme an das Außenrohr abgibt. Würde der Wickelkern nur monodirektional entlang des helikalen Strömungspfades durchströmt werden, wäre am Ende des helikalen Strömungspfades ein merklicher Temperaturabfall des Fluids gegenüber seiner Temperatur am Anfang des helikalen Strömungspfades. Wird der Wickelkern jedoch bidirektional derart durchströmt, dass das Fluid zunächst durch das Innenrohr und anschließend durch den helikalen Strömungspfad fließt, kann das Fluid am Anfang des Gesamtströmungspfads über das Innenrohr Wärme an das Fluid am Ende des Gesamtströmungspfads übertragen und somit einem Temperaturabfall entgegenwirken. Diese Wärmeübertragung radial nach außen erfolgt im Grunde auf der gesamten axialen Länge des Innenrohres.

Würde der Wickelkern umgekehrt durchströmt werden, d.h. zunächst entlang des helikalen Strömungspfads und anschließend durch das Innenrohr, erfolgt eine derartige Wärmeübertragung zwar ebenfalls, sie führt jedoch eher zu einem "thermischen Kurzschluss". So würde die Wärme am Anfang des helikalen Strömungspfads, wo sie zum Aufheizen des Außenrohres benötigt wird, über das Innenrohr auf das rückfließende Fluid übertragen werden, das sodann den Wickelkern verlässt. Die radial nach innen übertragene Wärme wird somit nicht genutzt.

Die Wendel kann in einer Ausführungsvariante auf dem Außenumfang des Innenrohres befestigt sein. Dies verhindert, dass sich die Lage der Wendel verschiebt, wenn das Außen- und das Innenrohr axial ineinandergeschoben werden. Beispielsweise kann die Wendel an dem Innenrohr angeschweißt sein, entweder punktuell oder entlang einer Schweißlinie.

Die Wendel kann aus einem Draht, beispielsweise einem Runddraht, insbesondere aus Stahl oder Edelstahl bestehen. Geeigneterweise können auch das Außen- und das Innenrohr aus Metall, insbesondere aus Edelstahl sein.

Die Wendel dient neben der räumlichen Trennung der Windungen des helikalen Strömungspfades dazu, dass Außenrohr zumindest stellenweise mechanisch auf dem Innenrohr abzustützen, was dem Wickelkern Stabilität verleiht. Dabei ist es nicht erforderlich, dass die Wendel dicht an dem Außenumfang des Innenrohres und/ oder an dem Innenumfang des Außenrohres anliegt, da benachbarte Windungen des helikalen Strömungspfades nicht zueinander abgedichtet sein müssen.

Von Vorteil ist es, wenn die radiale Höhe der Wendel, insbesondere der Drahtdurchmesser, der Differenz zwischen dem Innenradius des Außenrohres und dem Außenradius des Innenrohres entspricht oder geringfügig kleiner, maximal jedoch 20% kleiner als diese Differenz ist, um das axiale Fügen von Außen- und das Innenrohr zu erleichtern.

Gemäß einer anderen Ausführungsvariante kann die Wendel einstückig mit dem Außenrohr und/ oder mit dem Innenrohr sein und mit einem additiven Herstellungsverfahren schichtweise hergestellt sein.

In einer Ausführungsvariante kann vorgesehen sein, dass der Wickelkern zwei Wendel aufweist, die sich jeweils entlang zumindest eines axialen Abschnitts des Wickelkerns um die Wickelkernachse erstrecken und zueinander um 180° versetzt sind. In dieser Ausführungsvariante existieren auch zwei helikale Strömungspfade um die Wickelkernachse, die strömungstechnisch parallel liegen und zueinander um 180° versetzt sind. Jeder dieser beiden Strömungskanäle ist dann in die eine Umfangsrichtung durch eine der beiden Wendel und in die entgegengesetzte Umfangsrichtung durch die andere Wendel begrenzt.

Die Steigung der einen oder beiden Wendel kann beispielsweise 200mm betragen. Das bedeutet, dass eine Windung eine axiale Länge von 20cm besitzt. Im Bogenmaß ausgedrückt, beträgt die Steigung dann ca. 73°. Allgemein kann die Steigung der Wendel zwischen 45° und 80° liegen.

Die Gesamtlänge des gewickelten Rohres kann beispielsweise zwischen 1m und 2m betragen.

Um die Herstellung des Innenrohres mit der oder den Wendeln zu vereinfachen, kann das Innenrohr in Segmente unterteilt sein. Diese können über einen Formschluss, beispielsweise eine Renkverbindung axial zusammengeführt sein. Vorzugsweise sind die Segmente derart geformt, dass die Wendel im zusammengefügten Zustand kontinuierlich von einem Segment zum anderen Segment übergeht.

Es ist von Vorteil, wenn das gewickelte Rohr nach dem Erkalten des Wickelkerns zu einem axialen Ende des Wickelkerns geschoben und dort zum Erhalt einzelner Rohrabschnitte abgelängt wird. Somit muss das Rohr nicht mehr vollständig vom Wickelkern geschoben und anschließend zu einem separaten Schneidwerkzeug gebracht werden. Vielmehr kann ein Schneidwerkzeug Teil der erfindungsgemäßen Vorrichtung sein. Es kann einen Rohrabschnitt von dem gewickelten Rohr abtrennen während sich der Rest des Rohres noch auf dem Wickelkern befindet. Die Prozesszeit wird dadurch optimiert.

Das Schneidwerkzeug kann ein Quetschschneidemesser sein, so dass eine optimale Schnittkante für die Rohrabschnitte entsteht.

Die Rohrabschnitte können bestimmungsgemäß als Spaltrohre für Nassläuferpumpen verwendet werden. In einer anderen Verwendung können die Rohrstücke CFK-Ringe oder Hülsen, z.B. für Rotoren sein.

Es ist außerdem vorteilhaft, wenn das Außenrohr außenseitig mit einer verschleißfesten Beschichtung und/ oder innenseitig mit einer korrosions- und erosionshemmenden Beschichtung versehen ist. Die verschleißfeste Beschichtung kann beispielsweise Teflon sein. Sie reduziert den Verschleiß der Oberfläche des Wickelkerns, genauer gesagt des Außenrohres, beim Herunterschieben des gewickelten Rohres und erhöht dadurch die Standzeit des Wickelkerns. Die korrosionshemmende Beschichtung verringert das Risiko einer Korrosion, die infolge des Fluidkontakts besteht. Beispielsweise kann diese Beschichtung eine Nickelschicht sein.

Die Vorrichtung kann zwei oder mehr der vorstehend beschriebenen Wickelkerne aufweisen, die variotherm temperiert werden (optimale, hohe Kerntemperatur für den Wickelprozess, reduzierte Kerntemperatur für das Vor- und Abschieben des gewickelten Rohres unter Ausnutzung thermischer Ausdehnungseigenschaften des Wickelkernmaterials). Dabei kann vorgesehen sein, dass ein erster Wickelkern zu einem Zeitpunkt aufgeheizt wird oder bereits bewickelt wird, und ein zweiter Wickelkern abgekühlt wird oder auf diesem bereits Rohrstücke des gewickelten Rohres abgeschnitten werden.

Die besonderen Vorteile der Erfindung werden nachfolgend noch einmal stichpunktartig zusammengefasst:
- das Verfahren und Werkzeug bieten deutlich kürzere und wirtschaftlichere Prozesszeiten. Daraus resultieren kürzere Zykluszeiten und höhere Stückzahlen bei den Rohrabschnitten
- es sind keine kosten- und zeitintensiven Temper- oder Autoklavierprozesse notwendig
- es sind enge Bauteiltoleranzen erreichbar
- infolge des Abstreifens des gewickelten Rohres vom Wickelkern in dessen erkaltetem Zustand, besteht eine geringere Reibung zwischen Rohr und Wickeldorn, so dass geringere Abschiebkräfte vorliegen und ein sehr viel geringerer Werkzeugverschleiß (weniger Oberflächenverschleiß) und damit eine längere Standzeit des Wickelkerns erreicht wird
- infolge der über das Fluid erreichbaren Einstellbarkeit der Temperatur des Wickelkerns und deren Dauer, kann eine vollständige Kristallisation oder Vernetzung der Polymer-Matrix im Bandmaterial sichergestellt werden, so dass das Bandmaterial im gewickelten Rohr vollständig konsolidiert ist und jedes davon abgeschnittene Rohrstück homogene Werkstoff- und Formteileigenschaften ohne undefiniertem Schrumpf aufweist.
- das Verfahren ist besonders für lange Wickelkerne geeignet, beispielsweise mit einer Länge bis zu mehreren Metern.
- hohe Reproduzierbarkeit der Eigenschaften der Rohrabschnitte aufgrund der homogenen Temperierung der Wickelkerne
- Vermeidung von Kerndeformationen in Form eines Durchbiegens entlang der Länge des Kerns aufgrund unterschiedlicher Temperaturen und damit unterschiedlicher Materialausdehnungen (kein "Bi-Metalleffekt")

Die Erfindung ist eine Kombination einer variothermen Temperiertechnologie mit einem Faserverbund-Fertigungsverfahren und der Ausnutzung von Wärmedehnungseffekten für eine schonende und vollautomatisierbare Herstellung rohrförmiger Faserverbundbauteile bei gleichzeitig verringertem Werkzeugverschleiß.

Weitere Merkmale, Vorteile und Eigenschaften der Erfindung werden nachfolgend anhand von Ausführungsbeispielen und den beigefügten Figuren näher erläutert. In den Figuren bezeichnen identisch Bezugsziffern oder -zeichen identische oder zumindest wirkungsgleiche äquivalente Komponenten, Teile, Fläche oder Richtungen.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Die in der vorliegenden Beschreibung verwendeten Begriffe oder Wortbestandteile "radial", "axial", "umfänglich" oder "in Umfangsrichtung" beziehen sich allgemein auf die Längsachse des Stators oder des Werkzeugs, sofern nichts Gegenteiliges angegeben ist.

Merkmale einer Ausführungsvariante der Erfindung können auch bei einer anderen Ausführungsvariante vorhanden sein, sofern dies nicht technisch ausgeschlossen ist. Zudem können beschriebene Verfahrensmerkmale bei der hier beschriebenen Vorrichtung und beschriebene Vorrichtungsmerkmale bei dem hier beschriebenen Verfahren vorhanden sein.

Es zeigen:
- Figur 1:: eine schematische Darstellung von Teilen einer Wickelmaschine zum Herstellen von Rohren durch Wickeln
- Figur 2:: eine perspektivische Ansicht eines Wickelkerns gemäß der Erfindung
- Figur 3:: eine axiale Querschnittsdarstellung des Wickelkerns
- Figur 4:: eine perspektivische Ansicht eines Innenrohres des Wickelkerns
- Figur 5:: eine perspektivische Ansicht eines Rohrteils des Innenrohres samt endseitiger Halterung des Wickelkerns am ersten Axialende
- Figur 6:: eine axiale Querschnittsdarstellung eines Ausschnitts des Rohrteils samt der Halterung
- Figur 7:: eine perspektivische Ansicht der Halterung als Einzelteil
- Figur 8:: eine Schnittdarstellung der Halterung als Einzelteil
- Figur 9:: eine axiale Querschnittsdarstellung eines Ausschnitts eines Rohrteils samt endseitiger Halterung des Wickelkerns am zweiten Axialende
- Figur 10:: eine perspektivische Ansicht eines Ausschnitts des Rohrteils samt Halterung des Wickelkerns am zweiten Axialende
- Figur 11:: eine axiale Schnittdarstellung des Ausschnitts des Rohrteils samt Halterung des Wickelkerns am zweiten Axialende
- Figur 12:: eine axiale Schnittdarstellung eines Umlenkverschlusses am zweiten Axialende des Wickelkerns
- Figur 13:: eine schematische Darstellung der Gesamtanordnung von Komponenten der Wickelmaschine
- Figur 14:: eine axiale Schnittdarstellung durch einen Fluidanschluss zum Wickelkern und dessen Lagerung
- Figur 15:: eine axiale Schnittdarstellung durch eine Drehmomentaufnahme, eine Fluidumlenkung und eine Wickelkernaufnahme

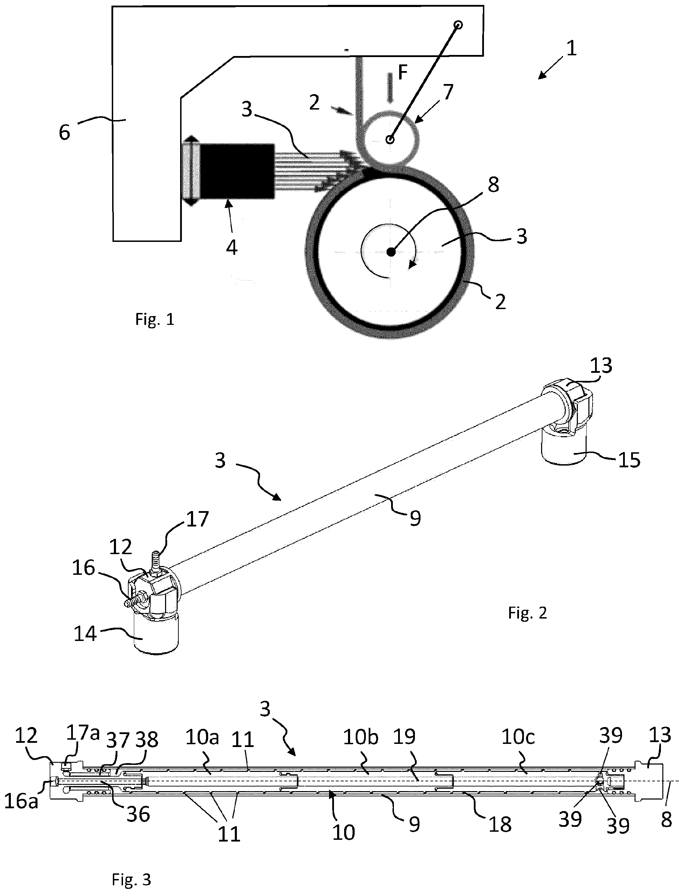

Figur 1 veranschaulicht in einer Prinzipdarstellung die Hauptkomponenten einer Vorrichtung 1 zur Herstellung gewickelter Rohre aus Kunststoff durch Wickeln eines flachen, faserverstärkten Bandmaterials 2 mit einer thermoplastischen (TP) oder duroplastischen (DP) Polymer-Matrix, nachfolgend als Tape 2 bezeichnet, auf einen aufgeheizten Wickelkern 3, während die Polymer-Matrix zur Erreichung eines Stoffschluss zweier übereinanderliegender Lagen des Tapes 2 mittels Laserbestrahlung 5 von einem Laser 4 aufgeschmolzen wird. Das Tape 2 wird von einem Wickelkopf 6 bereitgestellt und in dieser beispielhaften Ausführung etwa radial oder zum Radius leicht parallelversetzt an den Wickelkern 3 herangeführt. Eine federnd gehaltene Andrückrolle 7 des Wickelkopfs 6 drückt das Tape 2 mit einer Kraft F an den Wickelkern 3 und lenkt es dabei in eine Tangente an den Umfang des Wickelkerns 3 um, der in dieser Ausführungsvariante um seine Längsachse 8 rotiert. Der Laser 4 ist an dem Wickelkopf 6 gehalten und Teil desselben. Der Wickelkopf 6 ist somit eingerichtet, das Tape 2 auf den Wickelkern 3 zu wickeln und dabei gleichzeitig mittels Laserbestrahlung 5 aufzuschmelzen.

Auf diese Weise werden zwei oder mehr Lagen des Tapes 2 auf den Wickelkern 3 aufgebracht, während sich der Wickelkopf 6 relativ zum Wickelkerns 3 linear, parallel zur Wickelkernachse 8 den Wickelkern 3 entlang bewegt. Somit ergeben sich übereinanderliegende Tape-Lagen, die zueinander versetzt sind. Die axiale Länge des Wickelkerns 3 kann zwischen 20cm und mehreren Metern betragen. Das Verfahren ermöglicht es somit, ein quasi endloses Rohr herzustellen, welches allerdings zunächst ein Halbzeug bildet. Das hergestellte Rohr wird anschließend vom Wickelkern geschoben und es werden, je nach Bedarf, einzelne Rohrstücke gewünschter Länge abgetrennt. Ein derartiges Rohrstück kann dann beispielsweise als Spaltrohr in einer Nassläuferpumpe zum Einsatz kommen, um dort den Rotorraum vom Statorraum der Nassläuferpumpe zu trennen.

Es sei angemerkt, dass die dargestellten Bewegungen selbstverständlich auch umgekehrt sein können. So kann sich der Wickelkern 3 relativ zum Wickelkopf 6 linear bewegen, oder Wickelkern 3 und Wickelkopf 6 können gleichzeitig eine Linearbewegung relativ zueinander ausführen. Ferner kann in einer Ausführungsvariante der Wickelkopf 6 um den Wickelkern 3 herumdrehen. In einer solchen Variante macht es dann Sinn, wenn der Wickelkern 3 linear zum Wickelkopf 6 beweglich ist und sich an diesem vorbei bewegt, während das Tape 2 aufgewickelt wird.

Als Faserverstärkung enthält das Tape 2 beispielhaft Kohlefasern. Folglich sind die hergestellten Rohre oder Rohrabschnitte CFK-Rohre (carbonfaserverstärkte Kunststoffrohre) oder CFK-Hülsen. Alternativ können Mineralfasern, Glasfaser und/ oder Zellulosefasern verwendet werden. Die Verstärkungsfasern sind unidirektional (UD) in dem Tape 2 orientiert, so dass es ein sogenanntes UD-Tape 2 ist. Die thermoplastische oder duroplastische Polymer-Matrix des Tapes 2 kann z.B. PP (Polypropylen), PA (Polyamid), PC (Polycarbonat), PPS (Polyphenylensulfid), PEEK (Polyetheretherketon) oder EP (Epoxidharz) sein. Erfindungsgemäß werden somit z.B. TPUD-Tapes 2 zu dünnwandigen CFK-Rohren verarbeitet.

Der Wickelkern 3 wird während des Wickelprozesses beheizt und anschließend abgekühlt, folglich also temperiert. Die erfolgt erfindungsgemäß dadurch, dass der Wickelkern 3 von einer temperierten Flüssigkeit, beispielsweise Wasser, durchströmt wird, die den Wickelkern 3 aufheizt oder kühlt. Der Wickelkern 3 verbleibt hierfür in der Wickelvorrichtung 1. Das Aufheizen des Wickelkerns 3 erfolgt auf eine solche Temperatur und für eine solche zeitliche Dauer, dass sichergestellt ist, dass die Polymer-Matrix des Tapes 2 im Falle eines Thermoplasts vollständig kristallisiert oder im Falle eines wärmehärtenden Duroplasts vollständig vernetzt. Dies gewährleistet eine dauerhafte Maßhaltigkeit des gewickelten Rohres. Die Wickelkerntemperatur und die Dauer ihres Bestehens können durch das erfindungsgemäßen Verfahren individuell und unabhängig voneinander gewählt und eingestellt werden. Ferner können sowohl der Aufheizvorgang als auch der Abkühlvorgang des Wickelkerns 3 vergleichsweise schnell erfolgen, beispielsweise innerhalb weniger Minuten. Selbstverständlich können auch der Aufheizvorgang und/ oder der Abkühlvorgang selbst, d.h. die Temperatur zu- oder abnahme über der Zeit, über die Temperierung der Flüssigkeit eingestellt werden. Die Temperierung des Wickelkerns über die Flüssigkeit ist besonders energieeffizient, da die Wickelkerntemperatur nicht höher als erforderlich sein muss. Dies wird deshalb möglich, weil die Temperierung, insbesondere ein Beheizen, während des gesamten Wickelns erfolgt, d.h. der Wickelkern im Gegensatz zum Stand der Technik während des Wickelns nicht auskühlt.

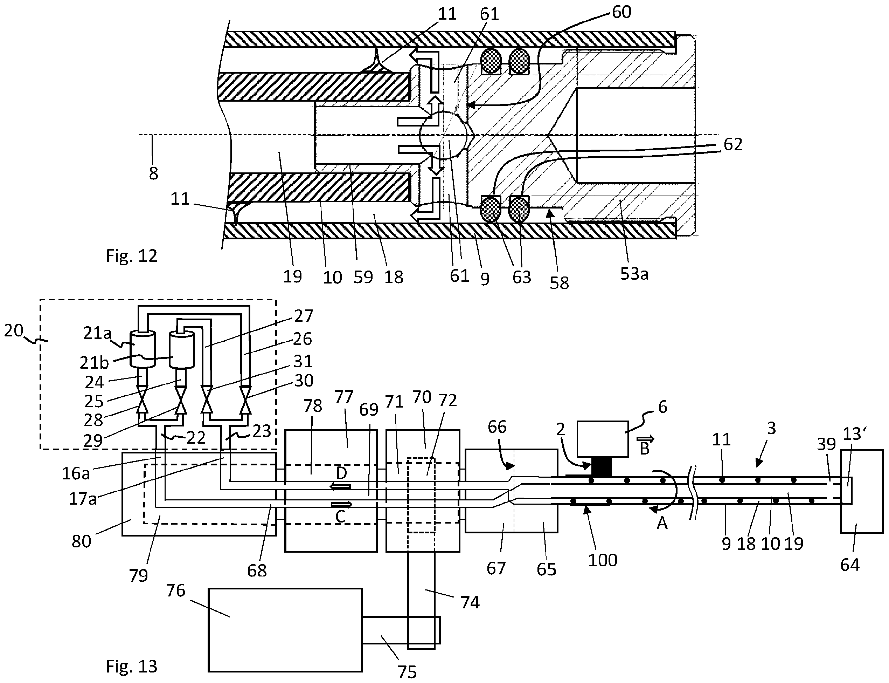

Figur 2 zeigt in perspektivischer Ansicht einen einzelnen erfindungsgemäßen Wickelkern 3. Der Wickelkern 3 kann in einer Variante einseitig links angeflanscht und von dieser Seite drehangetrieben werden. Wickelkern 3 weist ein kreiszylindrisches, hohles Außenrohr 9 auf, auf dessen Außenumfang das Tape 2 gewickelt wird. In einer anderen Ausführungsvariante kann das Außenrohr einen anderen Querschnitt aufweisen, z.B. einen ovalen oder eckigen Querschnitt, je nach Bedarf. Der hohle Aufbau des Wickelkerns hat den Vorteil, dass das Außenrohr 9 gegenüber einem konventionellen Wickelkern leichter ist, was seine Handhabung vereinfacht. Ferner bedingt der Wickelkern weniger Materialkosten. Die axialen Enden des Wickelkerns 3 sind jeweils mit einem Abschlusselement 12, 13 dichtend verschlossen, die axial vom Wickelkern 3 abstehen und hier jeweils in einer Halterung 14, 15 formschlüssig aufgenommen sind. Ein erstes der Abschlusselemente 12 weist einen ersten Fluidanschluss 16, 16a auf, der als Zuführungsanschluss für das Fluid dient, und einen zweiten Fluidanschluss 17, 17a auf, der als Abführungsanschluss für das Fluid dient. Die Versorgung und Entsorgung des Wickelkerns 3 mit temperierten Fluid erfolgt somit am selben axialen Ende des Wickelkerns 3, wodurch die hydraulischen Leitungswege vereinfacht und kurzgehalten werden können. Hierbei ist zu berücksichtigen, dass das abgeführte Fluid sinnvollerweise im Kreis gefördert wird, d.h. ausgehend von einer Temperiereinrichtung 20 mit einem Reservoir 21a, 21b (vgl. Figur 13) entsprechend temperierten Fluids zum Wickelkern 3 und von diesem zurück zur Temperiereinrichtung 20 bzw. dem entsprechenden Reservoir 21a, 21b.

Der erste und zweite Fluidanschluss 16, 16a, 17, 17a sind jeweils durch eine hydraulische Schnittstelle 16a, 17a und einen damit verbundenen Nippel 16, 17 gebildet, so dass ein entsprechender Schlauch 22, 23 (vgl. Figur 13) daran angeschlossen werden kann. Die Nippel 16, 17 stehen vom ersten Abschlusselement 12 ab. Genauer betrachtet, steht der erste Fluidanschluss 16, 16a axial von der dem Außenrohr 9 gegenüberliegenden axialen Stirnseite des ersten Abschlusselements 12 ab und zwar koaxial zur Wickelkernachse 8. Ferner steht der zweite Fluidanschluss 17 radial vom Umfang des ersten Abschlusselements 12 ab.

Das Vorhandensein beider Fluidanschlüsse am selben axialen Ende des Wickelkerns 3 in Verbindung mit dem geschlossenen anderen axialen Ende des Wickelkerns 3 impliziert bereits, dass eine Umlenkung des Fluid innerhalb des Wickelkerns 3 stattfindet. Dies wird anhand von Figur 3 deutlich, die einen axialen Querschnitt durch den Wickelkern 3 samt der Abschlusselemente 12, 13 zeigt. Innerhalb des Außenrohres 9 ist ein Innenrohr 10 koaxial angeordnet, das den Hohlraum im Außenrohr 9 in einen radial äußeren Strömungspfad 18 zwischen Innenrohr 10 und Außenrohr 9 und einen radial innen, genauer gesagt innerhalb des Innenrohres 10 vorhandenen Strömungspfad 19, teilt. Das Innenrohr 10 ist an den beiden Abschlusselementen 12, 13 gehalten.

Das Innenrohr 10 ist in dieser Ausführungsvariante segmentiert. Es besteht mit anderen Worten aus einzelnen aneinandergefügten Segmenten 10a, 10b, 10c, von denen in der in Figur 3 gezeigten Ausführungsvariante drei Segmente 10a, 10b, 10c vorhanden sind. Die vereinfacht einerseits die Herstellung des Innenrohres 10 und ermöglicht es andererseits bedarfsweise verschiedenen Längen des Innenrohres 10 zu realisieren.

Das Innenrohr 9 besitzt am ersten axialen Ende zum ersten Abschlusselement 12 hin eine mechanische Verbindung, durch die eine Fluidverbindung 36 zwischen dem ersten Fluidanschluss 16, 16a und dem inneren Strömungspfad 19 geschaffen ist. Es sei angemerkt, dass in Figur 3 die Nippel 16, 17 nicht dargestellt sind. Das Fluid fließt somit ausgehend vom ersten Abschlusselement 12 vom ersten axialen Ende in axialer Richtung durch den inneren Strömungspfad 19 zum anderen axialen Ende des Wickelkerns 3.

Am zweiten axialen Ende des Wickelkerns 3, d.h. zum zweiten Abschlusselement 12 hin, weist das Innenrohr 10 Querkanäle 39 auf, die eine Strömungsverbindung zwischen dem inneren Strömungspfad 19 und dem äußeren Strömungspfad 18 bilden. Insoweit unterscheidet sich das das zweite axiale Ende bereitstellende Segment 10c von den anderen Segmenten 10a, 10b, die keine Querkanäle aufweisen. Insgesamt sind beispielhaft vier solcher Querkanäle 39 symmetrisch am zweiten axialen Ende des Innenrohres 10 verteilt. Die Querkanäle 39 bewirken eine Strömungsumlenkung des Fluids von der einen axialen Strömungsrichtung im inneren Strömungspfad 19 zur entgegengesetzten axialen Strömungsrichtung im äußeren Strömungspfad 19. Somit kann das Fluid vom zweiten Ende in axialer Richtung durch den äußeren Strömungspfad 19 zum ersten axialen Ende des Wickelkerns 3 zurückfließen. Dort besteht eine Fluidverbindung 37 zum zweiten Fluidanschluss 17a, zu dem das Fluid strömt, nachdem es sich aus dem äußeren Strömungspfad 19 austretend in einem ringförmigen Sammelraum 38 gesammelt hat.

Insgesamt betrachtet, wird der Wickelkern 3 somit im Gegenstromverfahren durchströmt, und zwar koaxial vom ersten axialen Ende hin zum zweiten axialen Ende und von diesem wieder zurück zum ersten axialen Ende des Wickelkerns 3.

Zwischen dem Außenrohr 9 und dem Innenrohr 10 ist eine Wendel 11 vorhanden, die sich nahezu entlang der gesamten axialen Länge des Innenrohres 10 helikal um die Wickelkernachse 8 erstreckt. Durch die Wendel 11 wird der radial äußere Strömungspfad 18 zu einem helikalen Strömungspfad 18, so dass das Fluid in mehreren Windungen schraubenförmig um das Innenrohr 10 herum fließt. Die Wendel 11 bildet eine sich radial zwischen dem Außenrohr 9 und dem Innenrohr 10 erstreckende Trennwand, die den helikalen Strömungspfad 18 in axialer Richtung begrenzt. Die Wendel 11 trennt somit eine erste Windung des helikalen Strömungspfads 18 von der benachbarten nächsten Windung des helikalen Strömungspfads 18. Die Anzahl an Windungen der Wendel 11 und damit deren Steigung kann variieren.

Aufgrund der helikalen Durchströmung des äußeren Strömungspfads 18 wird eine homogene Temperaturverteilung entlang des Wickelkernumfangs erreicht.

In einer nicht dargestellten Ausführungsvariante können zwei oder auch mehr Wendel 11 vorhanden sein, die sich symmetrisch zueinander versetzt, bei zwei Wendeln 11 um 180° versetzt, helikal entlang des Außenumfangs des Innenrohres 10 erstrecken, beispielsweise mit einer Steigung von 200mm.

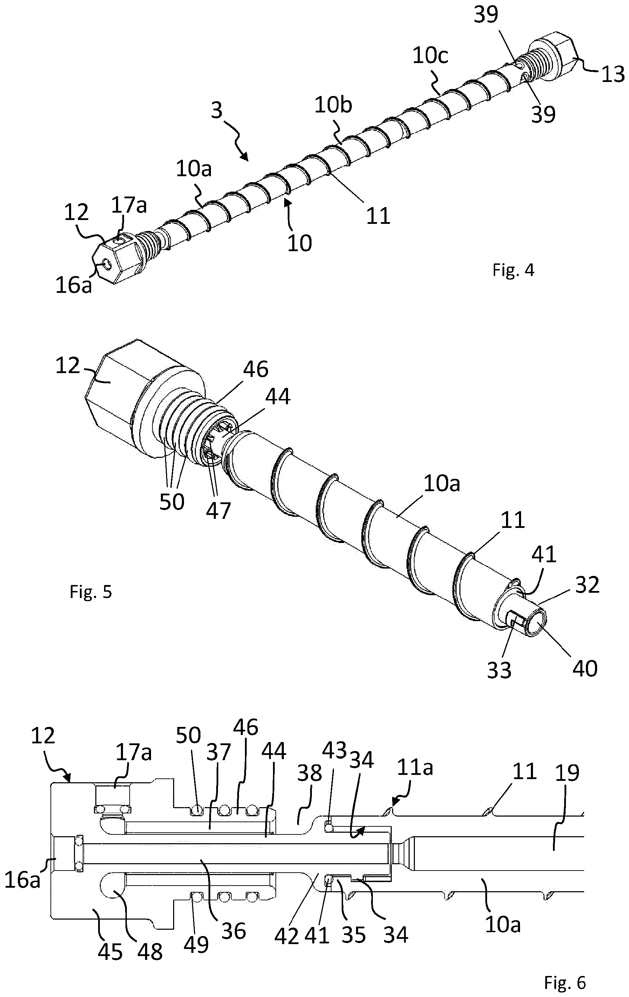

Figur 4 zeigt eine perspektivische Ansicht des Wickelkerns 3 bei entferntem Außenrohr 9, so dass der Blick auf das Innenrohr 10 und die Wendel 11 frei ist. Die Wendel 11 ist an das Innenrohr 10 angeformt und somit einstückig mit diesem ausgebildet. Trotz der Segmentierung des Innenrohrs 10 erstreckt sich die Wendel bündig und unterbrechungsfrei über die gesamte axiale Länge des Innenrohrs 10. Wie Figur 6 erkennen lässt, bildet die Wendel im Querschnitt eine Wand, deren Dicke an ihrer in das Innenrohr 8 übergehenden Basis breiter ist, als an ihrer dem Innenrohr 8 gegenüberliegenden, freiliegenden Kante 11a. Mit der freiliegenden Kante 11a liegt die Wendel 11 an der Innenseite des Außenrohres 9 zumindest abschnittsweise an. Eine dichtende Verbindung ist hierbei nicht nötig. Folglich entspricht die Höhe der Wendel 11 in etwa der radialen Breite des äußeren Strömungspfads 18 bzw. dem Abstand zwischen der Außenseite des Innenrohres 10 und der Innenseite des Außenrohres 9.

In einer andere Ausführungsvariante kann die Wendel 11 durch einen Runddraht gebildet sein, der schraubenförmig um das Innenrohr 10 gelegt und zumindest punktuell mit diesem fest verbunden, beispielsweise verschweißt ist. Die in den Figuren gezeigte Ausführungsvariante hat jedoch den Vorteil, dass die Wendel 11 direkt mit dem Innenrohr 10 hergestellt werden kann und weder verschoben oder verformt wird, noch abreißt, wenn das Innenrohr 10 in das Außenrohr 9 bzw. das Außenrohr 9 über das Innenrohr 10 geschoben wird.

Das Innenrohr 10 bzw. die einzelnen, das Innenrohr 10 bildenden Segmente 10a, 10b, 10c sind schichtweise mit einem additiven Fertigungsverfahren wie beispielsweise SLS (Selektives Lasersintern) hergestellt, im allgemeinen Sprachgebrauch auch als 3D-Druck bezeichnet. Dies ist sowohl in Kunststoff als auch in Metall möglich, wobei Metall aufgrund der originär besseren Wärmeleitfähigkeit zu bevorzugen ist.

Figur 5 zeigt eine perspektivische Darstellung eines einzelnen Segments 10a des Innenrohres 10 in Verbindung mit dem ersten Abschlusselement 12. Figur 6 zeigt einen axialen Schnitt eines Ausschnitts dieser Anordnung.

Zwei benachbarte Segmente 10a, 10b, 10c sind über eine lösbare Steckverbindung 32, 33, 34, 35 in der Art einer Bajonett-Verbindung mechanisch zusammengefügt, indem sie ineinandergesteckt und zueinander verdreht werden. Hierzu weist jedes Segment 10a, 10b, 10c an einem ersten axialen Ende eine axial vom Segmenthauptkörper vorspringende, zylindrische Anschlusshülse 32 auf, die auf ihrer radialen Außenseite ein radial nach außen vorstehendes, erstes Verriegelungselement 33 besitzt. Die Anschlusshülse 32 weist einen geringeren Durchmesser als der Segmenthauptkörper auf. Sie umschließt eine Mündungsöffnung 40 des inneren Strömungspfads 19, aus der das Fluid aus dem Segment 10a heraustritt. Das Verriegelungselement 33 ist in der vorliegenden Ausführungsvariante L-förmig umfassend einen sich achsparallel und einen sich in Umfangsrichtung erstreckenden Abschnitt. Am Übergang der Anschlusshülse 32 zum Segmenthauptkörper liegt ein O-Ring 41 auf der Anschlusshülse 32.

Um die Anschlusshülse 32 des einen Segments 10a in ein anderes Segment 10b einzuführen, besitzen die Segment 10a, 10b, 10c an dem anderen, zweiten axialen Ende eine der Anschlusshülse 32 in Form und Größe korrespondierende zylindrische Ausnehmung 34, die sich axial in das Segment 10a, 10b, 10c hineinerstreckt. Auf der Innenseite der Ausnehmung 34 ist ein radial nach innen vorstehendes, zweites Verriegelungselement 35 angeformt, das mit dem ersten Verriegelungselement 33 eines anderen Segments 10a, 10b, 10c nach dem Verdrehen der Segmente 10a, 10b, 10c zueinander zusammenwirkt, indem es von dem ersten Verriegelungselement 33 formschlüssig hintergriffen wird. Die Ausnehmung 34 besitzt einen größeren Durchmesser als der innere Strömungspfad 19. In der Ausführungsvariante gemäß Figur 6 verjüngt sich der Strömungspfad 19 außerdem zur Ausnehmung 34, bevor er in diese hineinmündet.

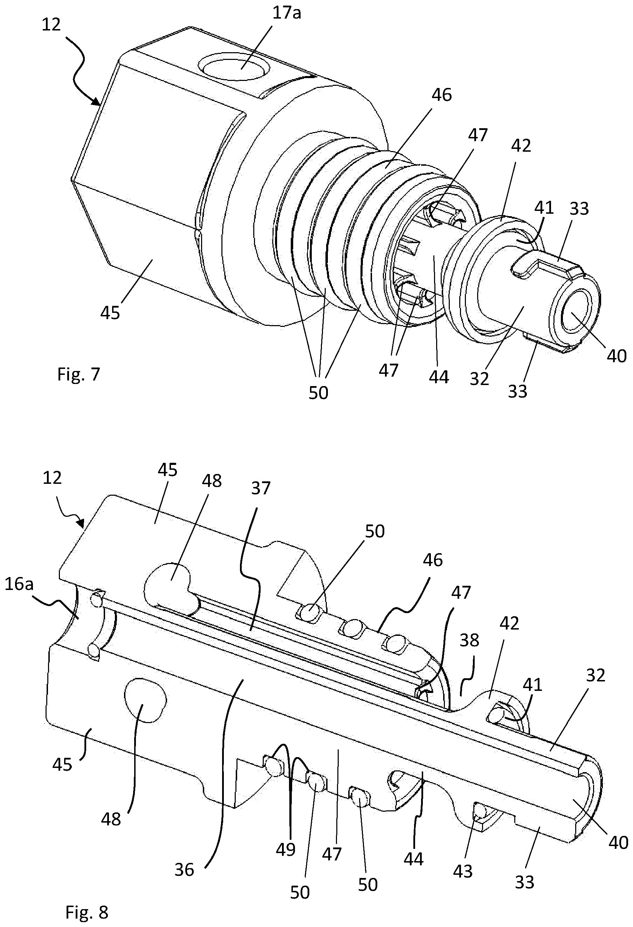

Wie Figur 6, 7 und 8 erkennen lassen, weist auch das erste Abschlusselement 12 eine zylindrische Anschlusshülse 32 auf, die auf ihrer radialen Außenseite ein radial nach außen vorstehendes, erstes Verriegelungselement 33 besitzt, so dass das erste Abschlusselement 12 mittels der Anschlusshülse 32 mechanisch mit dem zweiten Ende eines ersten Segments 10a des Innenrohres 10 verbunden werden kann. Diese Verbindung ist gleichzeitig eine hydraulische Verbindung, da die Anschlusshülse 32 des ersten Abschlusselements 12 das Mündungsende der Fluidverbindung 36 umschließt, die innerhalb des Abschlusselements 12 zum ersten Fluidanschluss 16, 16a führt.

Die Anschlusshülse 32 des ersten Abschlusselements 12 geht einstückig in eine tellerförmige Basis 42 über, die die Anschlusshülse 32 radial überragt und durch die Verbindung mit dem ersten Segment 10a in Anlage mit der axialen Stirnseite seines zweiten axialen Endes gelangt. Im Übergangsbereich der Anschlusshülse 32 zur Basis 42 bildet eine Ringnut 43, in ein O-Ring 41 einliegt. Die Basis 42 samt Anschlusshülse 32 bilden das axiale Ende eines Verbindungsrohres 44, in dem sich die Fluidverbindung 36 zum ersten Fluidanschluss 16a erstreckt. Das andere axiale Ende des Verbindungsrohres 44 geht einstückig in einen Hauptkörper 45 des ersten Abschlusselements 12 über.

Von dem genannten Hauptkörper 45 erstreckt sich koaxial zum Verbindungsrohr 44 eine Trägerhülse 46 in Richtung des ersten Segments 10a. Die Trägerhülse 46 ist vom Verbindungsrohr 44 radial beabstandet. Mehrere radiale Stege 47 verbinden die Trägerhülse 46 mit dem Verbindungsrohr 44 und sorgen für Stabilität. Die Stege 47 trennen sich parallel erstreckende Kanäle voneinander, die einen Teil der Fluidverbindung 37 bilden und die in einen Ringraum 48 im Hauptkörper 45 münden, der einen weiteren Teil der Fluidverbindung 37 bildet und an einem Umfangspunkt radial in den zweiten Fluidanschluss 17a übergeht.

Die Trägerhülse 46 weist auf ihrer Außenseite eine Anzahl von Ringnuten 49 auf, in denen jeweils ein O-Ring 50 angeordnet ist. Insgesamt sind drei solcher Ringnuten 49 samt O-Ring 50 vorgesehen. Die Trägerhülse 46 ist dazu bestimmt, sich in das Außenrohr 9 hinein zu erstrecken und zwar derart, dass das Außenrohr 9 im gefügten Zustand mit seiner Innenseite abgedichtet auf der Außenseite und den O-Ringen 50 der Trägerhülse 46 aufliegt. Mit anderen Worten trägt die Trägerhülse 46 das Außenrohr 9. Der axial zwischen der Trägerhülse 46 und der Basis 42 liegende Raumbereich bildet den hier ringförmigen Sammelraum 38, in dem sich das Fluid nach seinem Austreten aus dem helikalen Strömungspfad 18 sammelt.

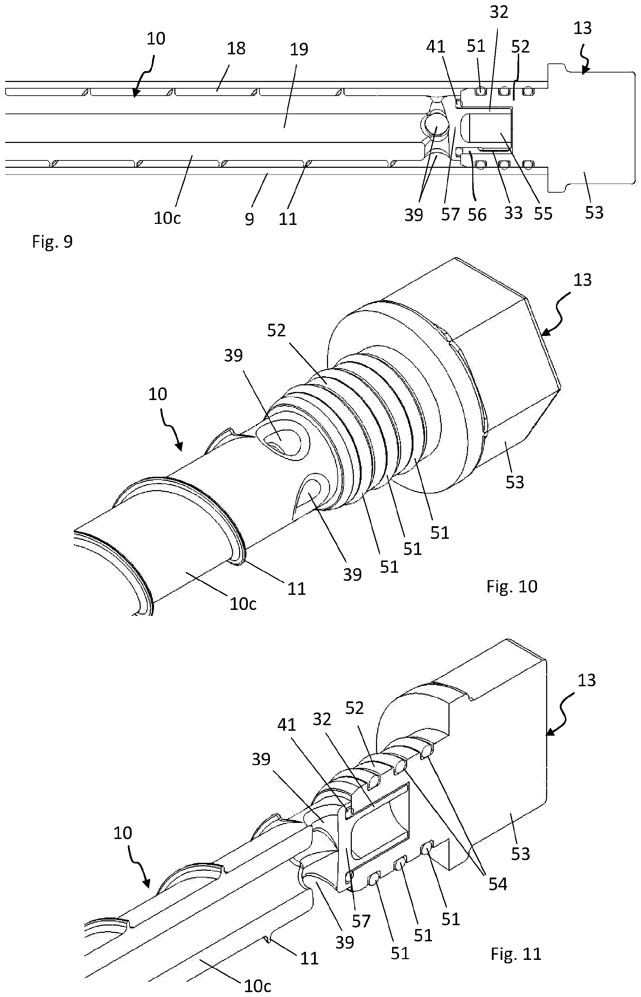

Figuren 9, 10 und 11 zeigen in verschiedenen Ansichten das dritte, letzte Segment 10c des Innenrohres 10 und dessen Verbindung zum zweiten Abschlusselement 13. Das letzte Segment 10c weist wie die übrigen Segmente 10a, 10b an dem ersten axialen Ende die axial vom Segmenthauptkörper vorspringende, zylindrische Anschlusshülse 32 auf, die auf ihrer radialen Außenseite das radial nach außen vorstehendes, erste Verriegelungselement 33 besitzt, um mit dem zweiten Abschlusselement 13 verbunden zu werden. Die Anschlusshülse 32 weist auch hier einen geringeren Durchmesser als der Segmenthauptkörper auf. Ferne liegt auch hier am Übergang der Anschlusshülse 32 zum Segmenthauptkörper ein O-Ring 41 auf der Anschlusshülse 32. Anders als die anderen Segmente 10a, 10b ist das letzte Segment 10c an dem ersten axialen Ende durch eine Wand 57 verschlossen. Die Wand 57 liegt zwischen den Querkanälen 39 und der Anschlusshülse 32, so dass sie quasi einen Boden der Anschlusshülse 32 bildet.

Das zweite Abschlusselement 13 umfasst einen etwa zylindrischen Hauptkörper 53, von dem ein Zapfen 52 axial vorspringt, der bestimmungsgemäß in das Außenrohr 9 eingesetzt wird. Wie beim ersten Abschlusselement 12, weist auch der Zapfen des zweiten Abschlusselements 13 drei Ringnuten 54 auf, in denen jeweils ein O-Ring 51 lagesicher angeordnet ist, um die Innenseite des Außenrohres 9 abzudichten. Der Zapfen 52 besitzt eine der Anschlusshülse 32 in Form und Größe korrespondierende zylindrische Ausnehmung 55, die sich axial in den Zapfen 52 hineinerstreckt. Auf der Innenseite der Ausnehmung 55 ist ein radial nach innen vorstehendes, zweites Verriegelungselement 56 angeformt, das mit dem ersten Verriegelungselement 33 des letzten Segments 10c nach dem Verdrehen des letzten Segments 10c und des zweite Abschlusselement 13 relativ zueinander zusammenwirkt, indem es von dem ersten Verriegelungselement 33 formschlüssig hintergriffen wird. Das letzte Segment 10c, und folglich das Innenrohr 10 sind somit fest mit dem zweiten Abschlusselement 13 verbunden und an diesem gehalten.

Figur 12 zeigt eine alternative Ausführungsvariante für die Umlenkung des Fluids an dem ersten axialen Ende des Wickelkerns 3. Im Gegensatz zu der Variante in den Figuren 3, 4 und 9 bis 11 erfolgt die Strömungsumlenkung vom inneren Strömungspfad 19 zum äußeren Strömungspfad 18 hier nicht über Querkanäle 39 im Innenrohr 10, sondern mittels einem Fluidumlenker 58, der das zweite Abschlusselement bildet und an dem ersten axialen Ende des Wickelkerns 3 sowohl in das Innenrohr 10 als auch in das Außenrohr 9 hineinragt. Der Fluidumlenker 58 ist mit einem Hauptkörper 53a in der Art eines Stopfens in das erste axiale Ende des Außenrohres 9 eingeschoben. Zwei in jeweils einer Ringnut 62 angeordnete O-Ringe 63 dichten den Fluidumlenker 58 gegen die Innenseite des Außenrohres 9 ab. Der Fluidumlenker 58 erstreckt sich gleichzeitig mit einem Rohrabschnitt 59 in das Innenrohr 10 hinein, so dass sich der innere Strömungspfad 19 in dem Rohrabschnitt 59 fortsetzt. Das Innenrohr 10 besitzt eine geringere axiale Länge als das Außenrohr 9, um ausreichend Bauraum zur Aufnahme des Fluidumlenkers 58 im Außenrohr zu gewähren.

Der Rohrabschnitt 59 steht axial von einem 4-Wege Verteiler 60 ab, der das Einsetzende des Fluidumlenkers 58 bildet und vier Strömungswege 61 (Querkanäle) definiert, die mit dem Hohlraum des Rohrabschnitts 59 verbunden sind und quer zu dessen Längserstreckung liegen, so dass aus dem inneren Strömungspfad 19 kommendes Fluid um 90° in die Strömungswege 61 hinein umgelenkt wird. Die Strömungswege 61 münden in den äußeren Strömungspfad 18, so dass aus den Strömungswegen 61 austretendes Fluid erneut um 90° umgelenkt wird, damit es in axialer Richtung helikal entlang des äußeren Strömungspfads 18 zurück zum zweiten axialen Ende des Wickelkerns 3 fließt. Die Fließrichtung ist in Figur 12 durch Pfeile angedeutet.

Es sei angemerkt, dass auch das erste und das zweite Abschlusselement 12, 13 sowie der Fluidumlenker 58 schichtweise durch ein additives Herstellungsverfahren hergestellt sein können. Additives Herstellungsverfahren sind besonders geeignet, um komplexe Geometrie zu erzeugen.

Die Funktionsweise des Wickelkerns 3 in der Vorrichtung 1 zur Herstellung gewickelter Rohre ist wie folgt. Das Temperierfluid, also heißes oder kaltes Fluid, strömt zunächst in den Wickelkern 3 über den inneren Strömungspfad 19 (eine Innenbohrung) des Innenrohres 10 bis zum Kernende. Dort wird das Fluid über den sogenannten Fluidumlenker 58 (auch als Fluidverteiler bezeichenbar), der über den Innenrohrumfang verteilt ein oder mehrere Ausströmöffnungen (Strömungswege 61) besitzt, umgelenkt und auf die Außenoberfläche des Innenrohres 10 und somit auch gleichzeitig über die Innenoberfläche des Außenrohres 9 geleitet. Die helixförmige Wendel 11 (Temperierwendel) unterstützt dabei die gleichförmige Verteilung des Temperierfluids in Umfangsrichtung. Würde diese Wendel 11 fehlen, hätte man eine in ihrer Strömungsgeschwindigkeit und Fluidtemperatur gegebenenfalls sehr ungleichförmige Strömung zwischen dem Innen- und Außenrohr 9, 10 und damit ungünstige Strömungsverhältnisse. Die Wendel 11 dient also der Fluidführung, wobei die Steigung, Ganghöhe und Kanalbreite dem jeweiligen Volumenstrombedarf angepasst (optimiert) sein kann.

Der Vorteil der helikalen d.h. helix-förmigen Führung der Strömung zwischen dem Innen- und dem Außenrohr 9, 10 liegt darin, dass der Strömungsquerschnitt gegenüber der geraden, rein ringkanalförmigen Durchströmung vergrößert ist, und damit die Strömungsgeschwindigkeit verringert wird. Die Wegstrecke verlängert sich um die Anzahl der Windungen. Die Widerstandszahl des helix-förmigen Strömungspfads 18 verringert sich etwas gegenüber dem Ringspalt bei gerader Durchströmung. Die geringere Widerstandszahl und die geringere Geschwindigkeit führen zu einem geringeren Druckverlust entlang des helix-förmigen Strömungspfad 18. Durch die geringere Strömungsgeschwindigkeit und die längere Wegstrecke ist die Aufenthaltszeit eines Fluidteilchens im Wickelkern 3 größer. Dadurch kann der Wärmeübergang zeitlich gesehen optimiert werden und man erhält eine gleichförmigere Temperaturverteilung im Wickelkern 3, insbesondere für die relevante Temperatur des Außenrohres 9 bzw. der Wickelkernoberfläche, die mit dem Bandmaterial 2 in Kontakt kommt.

Bei unterschiedlichen Kerndurchmessern für unterschiedlich große Wickelrohre kann die Wendel 11 jeweils optimal angepasst werden, genauer gesagt können die Geometrieparameter der Wendel 11 wie Windungsanzahl/Steigung, Kanalbreite, Ganghöhe etc. je nach gewünschtem Durchmesser des herzustellenden Rohres unterschiedlich sein, so dass bei jedem Durchmesser die optimalen Strömungsverhältnisse erreicht werden können.

In Figur 13 ist eine Prinzipdarstellung der Gesamtanordnung der einzelnen Komponenten einer erfindungsgemäßen Vorrichtung 1 zum Herstellen von Rohren 100 durch Wickeln auf einen Wickelkern 3 dargestellt, wie er in den Figuren 1 bis 11 gezeigt ist. Hinsichtlich des konstruktiven Aufbaus des Wickelkerns 3 wird deshalb auf die vorstehenden Ausführungen verwiesen. In der Anordnung gemäß Figur 13 ist vorgesehen, dass der Wickelkern 3 während des Aufwickelns des Tapes 2 rotiert, siehe Pfeil A, während er gleichzeitig variotherm temperiert wird, wie die Strömungspfeile C, D andeuten. Während des Wickelns bewegt sich zudem der Wickelkopf 6 linear parallel den Wickelkern 3 entlang, siehe Pfeil B.

Am ersten axialen Ende ist der Wickelkern 3 drehbar in einer ersten Lagerung 64 gehalten. Der Wickelkern 3 kann an diesem Ende durch ein zweites Abschlusselement 13' ähnlich dem Abschlusselement 13 verschlossen sein, das in den Figuren 2 3, 4 und 9 bis 11 gezeigt ist, wobei die Außenkontur des Abschlusselements so beschaffen ist, dass einer Drehlagerung realisiert werden kann. Alternativ kann das zweite Abschlusselement 13' dem Fluidumlenker 58 gemäß Figur 12 entsprechen.

Am zweiten axialen Ende Ist der Wickelkern 3 fest in einem Wickelkernadapter 65 gehalten, der den Wickelkern 3 außenumfänglich umgreift und das Fluid zum temperieren des Wickelkerns 3 für dessen Eintritt in den inneren Strömungsanal 19 bzw. koaxial hierzu erfolgenden Austritt aus dem äußeren Strömungspfad 18 leitet. Der Wickelkernadapter 65 ist somit an die Innen- und Außendurchmesser des Innen- und des Außenrohres 9, 10 angepasst und kann somit- je nach Innen- und Außendurchmesser bzw. je nach Wickelkern 3, unterschiedlich ausgebildet sein. Er ist in der Gesamtanordnung austauschbar, je nach Durchmesser des Wickelkerns 3.

Der Wickelkernadapter 65 besitzt eine hydraulisch-mechanische Schnittstelle 66 zu einem Fluidführungselement 67, mit dem er mechanisch verbunden werden kann. Das Fluidführungselement 67 bewirkt eine Umlenkung der im Wickelkernadapter 65 und im Wickelkern 3 zueinander koaxialen Zu- und Abströmung des Fluids in zwei zueinander parallele Strömungswege 68, 69. Im montierten Zustand bilden der Wickelkernadapter 65 und das Fluidführungselement 67 baulich eine Einheit. Unterschiedliche Wickelkernadapter 65, die dem Anschluss von Wickelkernen 3 mit unterschiedlichem Durchmesser dienen, haben die gleiche hydraulisch-mechanische Schnittstelle 66, so dass wahlweise der eine oder andere Wickelkernadapter 65 an das Fluidführungselement 67 angeschlossen werden kann. Wickelkernadapter 65 und Fluidführungselement 67 rotieren gemeinsam mit dem Wickelkern 3.

Das Fluidführungselement 67 schließt drehfest an eine Drehmomenteinkopplung 70 an. Diese ist im Wesentlichen aus einer Welle 71 und einem darauf drehfest angeordneten Ritzel oder einer darauf drehfest angeordneten Riemenscheibe 72 gebildet. Das Fluidführungselement 67 ist mit der Welle 71 gekoppelt. Das Ritzel oder die Riemenscheibe 72 steht mit einem Antriebsriemen 74 in kinetischer Verbindung, der wiederum in drehender Mitnahme mit einer Motorwelle 75 eines elektromotorischen Antriebs 76 steht. Der Elektromotor 76 treibt im Betrieb somit über die Motorwelle 75 den Riemen 74 an, der über die Riemenscheibe 72 ein Drehmoment auf die Welle 71 überträgt, so dass der gesamte Wickelstrang angetrieben wird, einerseits umfassend das Fluidführungselement 67, den Wickelkernadapter 65 und natürlich den Wickelkern 3. Anderenends umfasst der Wickelstrang einen weiteren ersten Wellenabschnitt 78, der in einer zweiten Lagerung 77 drehbar gelagert ist sowie einen zweiten Wellenabschnitt 79, der sich an den ersten Wellenabschnitt 78 anschließt und drehbar in einer Fluideinspeisung 80 einliegt.

Über die Fluideinspeisung 80 wird das Fluid in den Wickelstrang, genauer gesagt in den ersten Strömungsweg 68 eingespeist, der in den inneren Strömungspfad 19 des Innenrohres 10 führt. Ferner wird das Fluid über die Fluideinspeisung 80 auch aus dem Wickelstrang, genauer gesagt aus dem zweiten Strömungsweg 69 abgeführt, der von dem äußeren Strömungspfad 18 zwischen dem Innenrohr 10 und dem Außenrohr 9 kommt. Die Fluideinspeisung 80 besitzt dementsprechend einen ersten Fluidanschluss 16a, der als Zuführungsanschluss für das Fluid dient, und einen zweiten Fluidanschluss 17a, der als Abführungsanschluss für das Fluid dient. An dem ersten und zweiten Fluidanschluss 16a, 17a kann jeweils ein Nippel montiert sein, um einen entsprechenden Schlauch 22, 23 aufzusetzen.

Der erste und zweite Fluidanschluss 16a, 17a sind jeweils über eine Ventilanordnung 28, 29 bzw. 30, 31 mit einem ersten Reservoir 21a und einem zweiten Reservoir 21b einer Temperiereinrichtung 20 verbunden, in denen unterschiedlich temperiertes Fluid vorgehalten wird. So kann in dem ersten Reservoir 21a das Fluid eine erste Temperatur in einem Temperaturbereich zwischen 120°C und 200°C haben, und in dem zweiten Reservoir 21b eine zweite Temperatur in einem Temperaturbereich zwischen 10°C und 80°C haben. Die Temperaturen sind an das Tapematerial und an den Wärmeeintrag durch die Laserbestrahlung 5 beim Wickeln.anzupassen. Thermoplastische Tapes 2 auf Basis von PA, PPS oder PEEK haben eine höhere Schmelzetemperatur als z.B. PPS. Über die entsprechende Ventilanordnung 28, 29 bzw. 30, 31 kann wahlweise das Fluid des ersten oder zweiten Reservoirs 21a, 21b in den Wickelstrang eingespeist werden. Wie Figur 13 veranschaulicht, wird das Fluid hierbei im Kreis geführt und dabei demjenigen Reservoir 21a, 21b wieder zugeführt, dem es entnommen worden ist. Selbstverständlich sind auch komplexere Anordnungen möglich.

Das erste Reservoir 21a ist über eine erste Zuleitung 24 und ein erstes Ventil 28, das die erste Zuleitung 24 absperren kann, mit dem ersten Fluidanschluss 16a verbunden. Ferner ist das zweite Reservoir 21b über eine zweite Zuleitung 25 und ein zweites Ventil 29, das die zweite Zuleitung 25 absperren kann, mit dem ersten Fluidanschluss 16a verbunden. Die Verbindung vom ersten Ventil 28 zum ersten Fluidanschluss 16a und vom zweiten Ventil 29 zum ersten Fluidanschluss 16a erfolgt über eine gemeinsame Verbindungleitung 22. Diese Anordnung bildet Teil des Vorlaufs des Fluidkreises.

In entsprechender Weise ist das erste Reservoir 21a ist über eine erste Rückleitung 26 und ein drittes Ventil 30, das die erste Rückleitung 26 absperren kann, mit dem zweiten Fluidanschluss 17a verbunden. Ferner ist das zweite Reservoir 21b über eine zweite Rückleitung 27 und ein viertes Ventil 31, das die zweite Rückleitung 27 absperren kann, mit dem zweiten Fluidanschluss 17a verbunden. Die Verbindung vom dritten Ventil 30 zum zweiten Fluidanschluss 17a und vom vierten Ventil 31 zum zweiten Fluidanschluss 17a erfolgt ebenfalls über eine gemeinsame Verbindungleitung 23. Diese Anordnung bildet Teil des Rücklaufs des Fluidkreises.

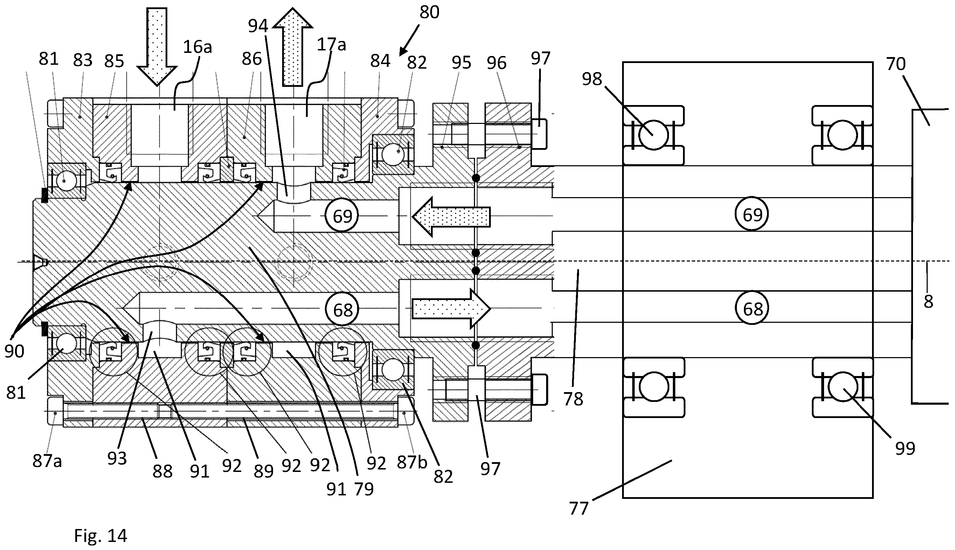

Figur 14 zeigt eine Detaildarstellung der Fluideinspeisung 80 und des darin drehbar gelagerten zweiten Wellenabschnitt 79. Die Lagerung erfolgt über Kugellager 81, 82 die jeweils in einer axialen Endplatte 83, 84 gehalten sind. Zwischen den Endplatten 83, 84 sind zwei im Wesentlichen baugleiche Ringscheiben 85, 86 koaxial angeordnet. Die Anordnung aus Endplatten 83, 84 und Ringscheiben 85, 86 ist gegeneinander mit Hilfe von Spannschrauben 87a, 87b verspannt, die sich durch entsprechende Bohrungen in den Endplatten 83, 84 und Ringscheiben 85, 86 hindurcherstrecken. Die beiden Ringscheiben 85, 86 unterscheiden sich lediglich darin, dass eine der beiden Ringscheiben 85 eine Gewindebohrung 88 für die Spannschrauben 87a, 87b besitzt, während die andere Ringscheibe 86 eine formschlussfreie Durchgangsbohrung 89 für die entsprechende Spannschraube 87b aufweist. Es werden somit eine längere Spannschraube 87b und eine kürzere Spannschraube 87b verwendet, um die Anordnung aus Endplatten 83, 84 und Ringscheiben 85, 86 gegeneinander zu verspannen, wobei beide Spannschrauben 87a, 87b in die Ringscheibe 85 mit der Gewindebohrung 88 eingeschraubt sind. Die längere Spannschraube 87b erstreckt sich dann durch die Durchgangsbohrung 89 hindurch.

Die Ringschreiben 85, 86 weisen eine zentrale Bohrung 90 auf, die vom zweiten Wellenabschnitt 79 durchragt wird. Der erste und zweite Fluidanschluss 16a, 17a ist jeweils durch eine radiale Bohrung in die entsprechende Ringschreiben 85, 86 gebildet, die in jeweils einer Ringnut 91 mündet, welche in den Innenumfang der zentralen Bohrung 90 eingebracht ist. Die Ringnut 91 dafür sorgt dafür, dass in jeder Winkelposition des zweiten Wellenabschnitt 79 eine Strömungsverbindung von dem jeweiligen Fluidanschluss 16a, 17a in den ersten bzw. zweiten Strömungsweg 68, 69 besteht. Bei beiden Ringscheiben ist beidseitig der jeweiligen Ringnut 91 in axialer Richtung jeweils eine Formdichtung 92 vorhanden, die hier annährend C-förmig ausgeführt sind und mit einer Dichtlippe an dem zweiten Wellenabschnitt 79 anliegt.

In dem zweiten Wellenabschnitt 79 sind Abschnitte des ersten und zweiten Strömungsweg 68, 69 durch zwei achsparallele, zueinander radial versetzte Bohrungen gebildet. Dabei erstreckt sich hier die den ersten Strömungsweg 68 mitbildende Bohrung tiefer in den zweiten Wellenabschnitt 79 hinein, als die den zweiten Strömungsweg 69 mitbildende Bohrung, so dass die jeweilige Bohrung etwa auf der axialen Höhe der entsprechenden Ringnut 90 in der ersten oder zweiten Ringscheibe 85, 86 endet. Allerdings könnten die beiden Bohrungen sich auch gleich tief in den zweiten Wellenabschnitt 79 hineinerstrecken. Auf besagter axialen Höhe der entsprechenden Ringnut 90 sind in den zweiten Wellenabschnitt 79 eine erste radiale Querbohrung 93, die in den ersten Strömungsweg 68 mündet, und eine zweite radiale Querbohrung 94, die in den zweiten Strömungsweg 69 mündet, eingebracht. Diese Querbohrungen 93, 94 bilden die jeweilige Strömungsverbindung zwischen dem ersten bzw. zweiten Strömungsweg 68 und der entsprechenden Ringnut 91, die trotz Rotation des zweiten Wellenabschnitts 79 stets besteht.

Der zweite Wellenabschnitt 79 ist über einen angeformten Flansch 95 mit einem korrespondierenden Gegenflansch 96 des ersten Wellenabschnitts 78 verbunden und kann somit vom Wickelstrang abgekoppelt werden. Schrauben 97 verbinden fixieren die beiden Flansche 95, 96 miteinander. Abschnitte des ersten und zweiten Strömungswegs 68, 69 erstrecken sich parallel durch die gesamte axiale Länge des ersten Wellenabschnitts 78 hindurch. Die beiden Flansche 95, 96 sind derart zueinander orientiert, dass die jeweiligen Abschnitte des ersten und zweiten Strömungswegs 68, 69 im ersten und zweiten Wellenabschnitt 78, 79 miteinander fluchten. Wie bereits dargestellt, ist der erste Wellenabschnitt 78 in einer Lagerung 77 gelagert. Hierzu weist die Lagerung 77 entsprechende Kugellager 98, 99 auf. Auf der der Fluideinspeisung 80 abgewandten Seite der Lagerung 77, ist der erste Wellenabschnitt 78 mit der Welle 71 der Drehmomenteinkopplung verbunden.

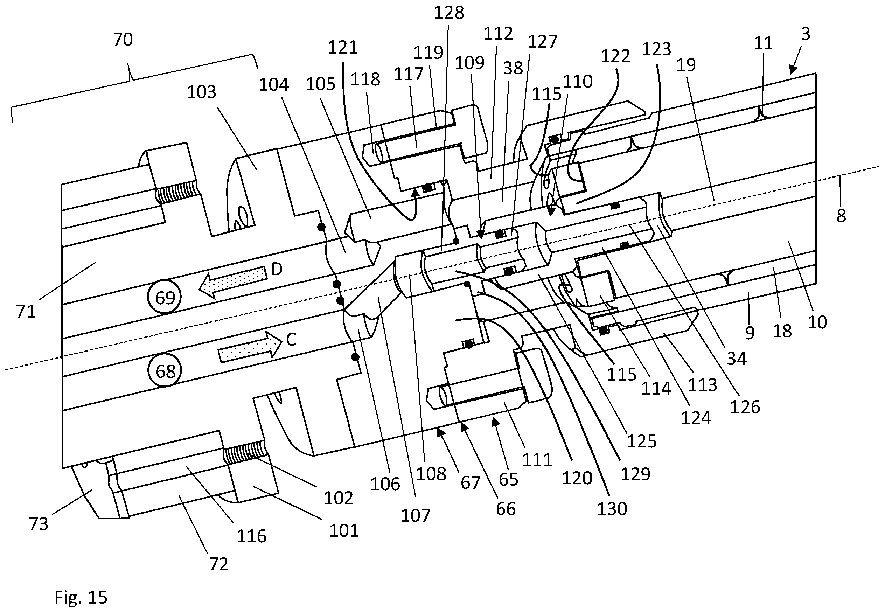

Figur 15 zeigt die weiteren Komponenten des Wicklungsstrangs, nämlich die Drehmomenteinkopplung 70, das Fluidführungselement 67, den Wickelkernadapter 65 und den Anfangsabschnitt des Wickelkerns 3. Wie bereits erläutert, ist die Welle 71 der Drehmomenteinkopplung 70 drehfest mit dem gelagerten ersten Wellenabschnitt 78 verbunden. Auf der Welle 71 ist die Riemenscheibe 72 drehfest angeordnet, die von dem hier nicht dargestellten Antriebsriemen 74 umgriffen und angetrieben wird. Eine Führungsscheibe 73 ist mittels nicht dargestellter Schrauben an einem Halteflansch 101 befestigt, indem die Schrauben in Gewindebohrungen 102 eingeschraubt werden. Der Halteflansch 101 ist mit der Welle 71 einstückig und erstreckt sich radial von diesem weg. Die Riemenscheibe 72 ist zwischen dem Halteflansch 101 und der Führungsscheibe 73 angeordnet, so dass die Schrauben sie durchragen und fixieren. Hierfür sind Schraubendurchführungen 116 in der Riemenscheibe 72 vorgesehen, in denen die Schrauben einliegen. Die Führungsscheibe 73 und der Halteflansch 101 überragen jeweils die Riemenscheibe 72 radial und halten den Antriebsriemen 74 axial in Position bzw. verhindern, dass der Antriebsriemen 74 von der Riemenscheibe 72 rutscht.

An ihrem der Lagerung 77 abgewandten axialen Ende weist die Drehmomenteinkopplung 70 einen Verbindungsflansch 103 auf, der ebenfalls radial von der Welle 71 absteht und zur mechanischen Verbindung mit dem Fluidführungselement 67 dient. Der erste und der zweite Strömungsweg 68, 69 verlaufen innerhalb des ersten und zweiten Wellenabschnitts 78, 79 sowie innerhalb der Welle 71 der Drehmomenteinkopplung 70 parallel und radial versetzt zur Wickelkernachse 8, welche gleichzeitig der Wickelstrangachse 8 entspricht. In dem Fluidführungselement 67 wird dieser parallele Verlauf der Strömungswege 68, 69 in einen zueinander koaxialen Verlauf abgeändert.

Hierzu weist das Fluidführungselement 67 jeweils eine erste Bohrung 106 für den ersten Strömungsweg 68 und eine erste Bohrung 104 für den zweiten Strömungsweg 69 auf, die sich von der der Drehmomenteinkopplung 70 zugewandten axialen Stirnseite des Fluidführungselement 67 achsparallel in dieses hineinerstrecken. Das Fluidführungselement 67 ist formschlüssig an den Verbindungsflansch 103 angesetzt und mit diesem verschraubt, wobei die Schraubverbindung in Figur 15 nicht dargestellt ist. Im angesetzten Zustand fluchten die beiden ersten Bohrungen 104, 106 mit dem entsprechenden ersten und zweiten Strömungsweg 68, 69 in der Welle 71 der Drehmomenteinkopplung 70.

An die erste Bohrung 106 für den ersten Strömungsweg 68 schließt sich eine zweite Bohrung 107 an, deren Erstreckungsrichtung winklig zur Achse der ersten Bohrung 106 liegt, um den ersten Strömungsweg 68 zur Mitte bzw. Achse 8 des Wicklungsstrangs zu führen. Die zweite Bohrung 107 ist ebenfalls von der der Drehmomenteinkopplung 70 zugewandten axialen Stirnseite des Fluidführungselement 67 in dieses eingebracht. Die zweite Bohrung 107 endet im Bereich der Achse 8 des Fluidführungselement 67, mithin des Wicklungsstrangs. Dort geht sie in eine dritte Bohrung 108 über, deren Achse auf der Wicklungsstrangachse 8 liegt und die von der der Drehmomenteinkopplung 70 abgewandten axialen Stirnseite in das Fluidführungselement 67 eingebracht ist. Die genannte erste Bohrung 106, die zweite Bohrung 107 und die dritte Bohrung 108 bilden gemeinsam den im Fluidführungselement 67 liegenden Abschnitt des ersten Strömungswegs 68.

An die erste Bohrung 104 für den zweiten Strömungsweg 69 schließt sich ebenfalls eine zweite Bohrung 105 an. Diese zweite Bohrung 105 ist von der der Drehmomenteinkopplung 70 abgewandten axialen Stirnseite des Fluidführungselement 67 axial in dieses eingebracht und ist gegenüber der ersten Bohrung 104 radial nach außen versetzt, und zwar etwa um den Radius der ersten Bohrung 104, so dass sich die erste und zweite Bohrung 104, 105 radial überlappen. Die Bohrtiefe der ersten und zweiten Bohrung 104, 105 ist derart bemessen, dass sich die erste und zweite Bohrung 104, 105 auch axial überlappen. Die genannte erste Bohrung 104 und die zweite Bohrung 105 bilden gemeinsam den im Fluidführungselement 67 liegenden Abschnitt des zweiten Strömungswegs 69.

Formschlüssig an das Fluidführungselement 67 angesetzt, ist der Wickelkernadapter 65, der die Verbindung vom Fluidführungselement 67 zum Wickelkern 3 bildet. Mittels Schrauben 117 ist der Wickelkernadapter 65 in entsprechenden Gewindebohrungen 118 im Fluidführungselement 67 befestigt. Die Anlagefläche zwischen Wickelkernadapter 65 und Fluidführungselement 67 bildet eine hydraulisch-mechanische Schnittstelle 66.

Der Wickelkernadapter 65 besteht im Wesentlichen aus drei Teilabschnitten 111, 112, 113, umfassend einen Flanschabschnitt 111, einen Rohrabschnitt 112 und einem Hülsenabschnitt 113. Der Flanschabschnitt 111 ist an das Fluidführungselement 67 angesetzt. Er weist Bohrungen 119 zur Aufnahme der Schrauben 117 auf. In dem Flanschabschnitt 111 ist eine zylindrische Ausnehmung 121 vorgesehen, in die sich eine vorstehende, zentrale Nabe 120 des Fluidführungselements 67 hineinragt.

Der Flanschabschnitt 111 geht in den Rohrabschnitt 112 über, der einen geringerem Außendurchmesser als der Flanschabschnitt 111 aufweist. Das Innere des Rohrabschnitts 112 bildet den Sammelraum 38. Der Rohrabschnitt 112 ist zylindrisch. Er kann jedoch in einer anderen Ausführungsvariante konisch sein. An seinem dem Flanschabschnitt 111 gegenüberliegenden axialen Ende geht der Rohrabschnitt 112 in den Hülsenabschnitt 113 über. Der Rohrabschnitt 112 verbindet somit den Flanschabschnitt 111 mit dem Hülsenabschnitt 113. Letzterer besitzt ebenfalls einen größeren Außendurchmesser als der Rohrabschnitt 112. Der Hülsenabschnitt 113 umgreift den Wickelkern 3 außenumfänglich. Beispielsweise ist der Wickelkern 3 mit dem Außenrohr 9 über eine Bajonett-Verbindung an der Innenseite des Hülsenabschnitts 112 befestigt.

Der Wickelkern 3 besitzt wie zuvor beschrieben, das Außenrohr 9 und das darin koaxial angeordnete Innenrohr 10, dessen Wandstärke hier dicker als bei der Variante in den Figuren 2 bis 12 ist, jedoch in seinem Inneren ebenfalls den inneren Strömungspfad 19 besitzt. An dem Außenumfang des Innenrohres 10 erhebt sich wie zuvor die Wendel 11, die sich entlang einer Schraubenlinie um die Wickelkernachse 8 in dem zwischen Innen- und Außenrohr 9, 10 gebildeten Zwischenraum 18 erstreckt und damit den äußeren, helikalen Strömungspfad 18 definiert. Dabei liegt die Wendel 11 an der Innenseite des Außenrohres 9 an.

Das dem Wickelkernadapter 65 zugewandte, zweite axiale Ende des Wickelkerns 3 ist hier ebenfalls gegenüber der Variante in den Figuren 2 bis 23, bei der deren zweites axiales Ende mit dem ersten Abschlusselement 12 verbunden ist, etwas abgewandelt. Das Innenrohr 10 besitzt zwar ebenfalls die Ausnehmung 34, die den Durchmesser des inneren Strömungspfads 19 zur Stirnseite des zweiten axialen Endes hin vergrößert. Jedoch weist das Innenrohr 10 am zweiten axialen Ende eine stufenförmige Ausnehmung 122 auf, so dass die axiale Stirnseite des zweiten axialen Endes des Innenrohres 10 eine Nabe 123 mit einem geringeren Außendurchmesser als der die Wendel 11 tragende, restliche Teil des Innenrohres 10 bildet. Diese Nabe 123 erstreckt sich in einen Abschlussring 114 hinein, der koaxial in das Außenrohr 9 eingeschoben ist und das Innenrohr 10 im Außenrohr 9 in Position hält. Der Abschlussring 114 besitzt in der Flucht mit dem Zwischenraum 18 liegende Öffnungen 115, damit das Fluid aus dem Zwischenraum 18 bzw. dem helikalen Strömungspfad 18 austreten kann.

Eine den Sammelraum 38 entlang der Wickelkernachse 8 durchragende Fluidverbindung zwischen dem Fluidführungselement 67 und dem Wickelkern 3 wird durch zwei ineinander gesteckte Brückenelemente 109, 110 erreicht, nämlich einem Distanzrohr 109 und einem Innenrohradapter 110. Diese Zweiteiligkeit gewährt eine gewisse Flexibilität beim axialen Fügen der Komponenten und für die Anpassung des Wickelkernadapters 65 an verschiedene Wickelkerne 3.

Das Distanzrohr 109 weist einen rohrförmigen Vorderabschnitt 127 und einen rohrförmigen Hinterabschnitt 128 auf, zwischen denen ein ringförmiger Vorsprung 130 radial am Distanzrohr 109 vorsteht. Das Distanzrohr 109 ragt mit dem zylindrischen Hinterabschnitt 128 in die dritte Bohrung 108 des ersten Strömungswegs 68 im Fluidführungselement 76 hinein. Der ringförmige Vorsprung 130 bildet einen Anschlag, bis zu dem das Distanzrohr 109 in die dritte Bohrung 108 eingeschoben ist. Der Vorderabschnitt 127 des Distanzrohrs 109 ragt in den Innenrohradapter 110 hinein. Ein Durchgangskanal 129 erstreckt sich durch das Distanzrohr 109 und leitet das Fluid von der dritten Bohrung 108 zum Innenrohradapter 110.

Der Innenrohradapter 110 weist ebenfalls einen rohrförmigen Vorderabschnitt 124 und einen rohrförmigen Hinterabschnitt 125 auf, zwischen denen ein Übergangsbereich derart besteht, dass der Hinterabschnitt 125 einen größeren Außendurchmesser als der Vorderabschnitt 124 aufweist. Der Innenrohradapter 110 erstreckt sich mit dem Vorderabschnitt 124 in die Ausnehmung 34 des Innerohres 10 hinein, während gegenüberliegend der Hinterabschnitt 125 des Innenrohradapters 110 den Vorderabschnitt 127 des Distanzrohres 109 außen umgreift. Der Innenrohradapter 110 besitzt ebenfalls einen Durchgangskanal 129, damit das Fluid vom Distanzrohr 109 in den inneren Strömungspfad 19 des Innenrohres 10 gelangen kann. Somit kann das Fluid vom ersten Fluidanschluss 16a kommend, über den ersten Strömungsweg 68 in dem ersten und zweiten Wellenabschnitt 78, 79 und in der Welle 71 der Drehmomentaufnahme 70 sowie über die erste, zweite und dritte Bohrung 106, 107, 108 im Fluidführungselement 67, das Distanzrohr 109 und den Innenrohradapter 110 in den inneren Strömungspfad 19 des Wickelkerns 3 fließen.

An dem dem Wickelkernadapter 65 abgewandten ersten axialen Ende, zudem das Fluid dann in axialer Richtung fließt, weist das Innenrohr 10 oder ein damit verbundener Fluidumlenker 58 die zuvor genannten Querkanäle 39 auf, die die Strömungsverbindung vom inneren Strömungspfad 19 im Innenrohr 10 zum helikalen Strömungspfad 18 zwischen Innen- und Außenrohr 9, 10 schaffen, so dass das Fluid in den helikalen Strömungspfad 18 eintreten, und darin axial zum Wickelkernadapter 65 zurückfließen kann. Es strömt dann durch die Öffnungen 115 in den axial vor dem Abschlussring 114 liegenden Sammelraum 38 hinein, in den auf der gegenüberliegenden axialen Seite die zweite Bohrung 105 des zweiten Strömungswegs 69 mündet. Somit kann das Fluid den Sammelraum 38 über die besagte zweite Bohrung 105 verlassen und über den zweiten Strömungsweg 69 in der Welle 71 der Drehmomentaufnahme 70 sowie in dem ersten und zweiten Wellenabschnitt 78, 79 zum zweiten Fluidanschluss 17a zurückfließen.

Selbstverständlich kann die Durchströmung des Wickelstrangs auch umgekehrt erfolgen. Dabei erfolgt die Durchströmung zunächst mit heißem Fluid aus dem ersten Reservoir 21a, um den Wickelkern 3 aufzuwärmen und dann das Tape 2 zu wickeln, und anschließend mit kälterem Fluid aus dem zweiten Reservoir 21b, um den Wickelkern 3 und das Tape 2 abzukühlen. Sämtliche Flächen der ineinander gesteckten oder aneinander anliegenden Komponenten sind durch Dichtungsringe, wie z.B. O-Ringe, abgedichtet, um einen Fluidaustritt zu vermeiden. Die Dichtungsringe sind in Figur 15 durch ausgefüllte Kreise gekennzeichnet.

Nach dem Abkühlen wird das hergestellte Rohr 100 vom Wickelkern 3 geschoben und in einzelne Rohrstücke geschnitten.

Auf die vorstehend beschriebe Weise wird eine variotherme Temperierung des Wickelkerns 3 mittels Gegenstromverfahren unter Verwendung einer Helix-Geometrie für die Fluidführung im Wickelkern 3 realisiert, um eine gleichmäßige Temperierung der Außenoberfläche des Wickelkerns zu erreichen, insbesondere speziell für das Wickeln von TPUD-Tapes 2 zu dünnwandigen CFK-Rohren 100, die in zugeschnittener Form, als Rohrabschnitte davon, zu Spaltrohren für Nassläuferpumpen gefertigt werden können.

### Bezugszeichenliste

- 1: Vorrichtung zur Herstellung gewickelter Rohre
- 2: Bandmaterial, Tape
- 3: Wickelkern
- 4: Laser
- 5: Laserbestrahlung
- 6: Wickelkopf
- 7: Andrückrolle
- 8: Längsachse
- 9: Außenrohr
- 10: Innenrohr
- 10a: erstes Segment
- 10b: zweites Segment
- 10c: drittes Segment, letztes Segment
- 11: Wendel
- 12: erstes Abschlusselement
- 13: zweites Abschlusselement
- 14: Halterung
- 15: Halterung
- 16: Erster Fluidanschluss, Nippel
- 16a: Erster Fluidanschluss, hydraulische Schnittstelle
- 17: Zweiter Fluidanschluss, Nippel
- 17a: Zweiter Fluidanschluss, hydraulische Schnittstelle
- 18: Zwischenraum äußerer Strömungskanal, helikaler Strömungskanal
- 19: innerer Strömungskanal
- 20: Temperiereinrichtung
- 21a: erstes Reservoir
- 21b: zweites Reservoir
- 22: gemeinsame Verbindungsleitung Vorlauf, Schlauch
- 23: gemeinsame Verbindungsleitung Rücklauf, Schlauch
- 24: erste Zuleitung
- 25: zweite Zuleitung
- 26: erste Rückleitung
- 27: zweite Rückleitung
- 28: erstes Ventil
- 29: zweites Ventil
- 30: drittes Ventil
- 31: viertes Ventil
- 32: Anschlusshülse
- 33: erstes Verriegelungselement
- 34: Ausnehmung
- 35: zweites Verriegelungselement
- 36: Fluidverbindung zum ersten Fluidanschluss
- 37: Fluidverbindung zum zweiten Fluidanschluss
- 38: Vorraum
- 39: Querkanal
- 40: Mündungsöffnung
- 41: O-Ring
- 42: Basis
- 43: Ringnut
- 44: Verbindungsrohr
- 45: Hauptkörper
- 46: Trägerhülse
- 47: Steg
- 48: Ringraum
- 49: Ringnut
- 50: O-Ring
- 51: O-Ring
- 52: Zapfen
- 53: Hauptkörper
- 53a: Hauptkörper
- 54: Ringnut
- 55: Ausnehmung
- 56: Zweites Verriegelungselement
- 57: Wand
- 58: Fluidumlenker
- 59: Rohrabschnitt
- 60: 4-Wege Verteiler
- 61: Strömungsweg, Querkanal
- 62: Ringnut
- 63: O-Ring
- 64: Erste Lagerung
- 65: Wickelkernadapter
- 66: hydraulisch-mechanische Schnittstelle
- 67: Fluidführungselement
- 68: Erster Strömungsweg
- 69: Zweiter Strömungsweg
- 70: Drehmomenteinkopplung
- 71: Welle
- 72: Riemenscheibe
- 73: Führungsscheibe
- 74: Antriebsriemen
- 75: Motorwelle
- 76: Elektromotor
- 77: Zweite Lagerung
- 78: Erster Wellenabschnitt
- 79: Zweiter Wellenabschnitt
- 80: Fluideinspeisung
- 81: Kugellager
- 82: Kugellager
- 83: Endplatte
- 84: Endplatte
- 85: Ringscheibe
- 86: Ringscheibe
- 87a: kurze Spannschraube
- 87b: lange Spannschraube
- 88: Gewindebohrung
- 89: Durchgangsbohrung
- 90: zentrale Bohrung
- 91: Ringnut
- 92: Formdichtung
- 93: Erste Querbohrung
- 94: Zweite Querbohrung
- 95: Flansch
- 96: Gegenflansch
- 97: Schraube
- 98: Lager
- 99: Lager
- 100: Gewickeltes Rohr
- 101: Halteflansch
- 102: Gewindebohrung
- 103: Verbindungsflansch
- 104: Erste Bohrung
- 105: Zweite Bohrung
- 106: Erste Bohrung
- 107: Zweite Bohrung
- 108: Dritte Bohrung
- 109: Distanzrohr
- 110: Innenrohradapter
- 111: Flanschabschnitt
- 112: Rohrabschnitt
- 113: Hülsenabschnitt
- 114: Abschlussring
- 115: Öffnungen
- 116: Schraubendurchführungen
- 117: Schraube
- 118: Gewindebohrung
- 119: Bohrungen
- 120: Zentrale Nabe
- 121: Zylindrische Ausnehmung
- 122: Stufenförmige Ausnehmung
- 123: Nabe
- 124: Vorderabschnitt des Innenrohradapters
- 125: Hinterabschnitt des Innenrohradapters
- 126: Durchgangskanal des Innenrohradapters
- 127: Vorderabschnitt des Distanzrohres
- 128: Hinterabschnitt des Distanzrohres
- 129: Durchgangskanal des Distanzrohres
- 130: Ringförmiger Vorsprung

## Patentansprüche

1. Verfahren zur Herstellung gewickelter Rohre (100) aus Kunststoff, insbesondere von Spaltrohren für Nassläuferpumpen, durch Wickeln eines flachen, faserverstärkten Bandmaterials (2) mit einer thermoplastischen oder duroplastischen Polymer-Matrix auf einen aufgeheizten Wickelkern (3) während die Polymer-Matrix für einen Stoffschluss zweier übereinanderliegender Lagen des Bandmaterials (2) mittels Laserbestrahlung (5) aufgeschmolzen wird, **dadurch gekennzeichnet, dass** der Wickelkern (3) ein Außenrohr (9), auf das das Bandmaterial (2) gewickelt wird, und ein darin angeordnetes Innenrohr (10) aufweist, und zur variothermen Temperierung des Außenrohres (9) ein Fluid den Wickelkern (3) axial entlang wenigstens eines helikalen Strömungspfades (18) um die Wickelkernachse (8) durchströmt, der sich radial zwischen dem Außenrohr (9) und dem Innenrohr (10) entlang zumindest eines axialen Abschnitts des Wickelkerns (3) erstreckt.

2. Verfahren nach Anspruch 1, **dadurch gekennzeichnet, dass** das Fluid den Wickelkern (3) beim Wickeln mit einer ersten Temperatur in einem ersten Temperaturbereich, insbesondere zwischen 120°C und 200°C, und anschließend mit einer zweiten Temperatur in einem zweiten Temperaturbereich, insbesondere zwischen 10°C und 80°C, durchströmt.

3. Verfahren nach Anspruch 1 oder 2, **dadurch gekennzeichnet, dass** eine Temperiereinrichtung (20) das Fluid wahlweise mit der ersten Temperatur oder mit der zweiten Temperatur bereitstellt.

4. Verfahren nach einem der vorherigen Ansprüche, **dadurch gekennzeichnet, dass** der Wickelkern (3) während des Wickelns um seine Längsachse rotiert.

5. Verfahren nach einem der vorherigen Ansprüche, **dadurch gekennzeichnet, dass** das Fluid das Innenrohr (10) in axial entgegengesetzte Richtung zum helikalen Strömungspfad (18) durchströmt, wobei das Fluid durch wenigstens eine Fluidumlenkung (39, 61), die in Strömungsrichtung am Ende des axialen Abschnitts oder jenseits dieses Endes liegt, vom Innenrohr (10) zum helikalen Strömungspfad (18) oder umgekehrt umgelenkt wird.

6. Verfahren nach Anspruch 5, **dadurch gekennzeichnet, dass** das Fluid zunächst das Innenrohr (10) durchströmt und anschließend durch den helikalen Strömungspfad (18) zurückströmt.

7. Verfahren nach einem der vorherigen Ansprüche, **dadurch gekennzeichnet, dass** das gewickelte Rohr (100) nach dem Erkalten des Wickelkerns (3) zu einem axialen Ende des Wickelkerns (3) geschoben und dort zum Erhalt einzelner Rohrabschnitte abgelängt wird.

8. Vorrichtung (1) zur Herstellung von Rohren (100) aus Kunststoff, insbesondere von Spaltrohren für Nassläuferpumpen, mit einem beheizbaren Wickelkern (3) und einem ein flaches, faserverstärktes Bandmaterial (2) mit einer thermoplastischen oder duroplastischen Polymer-Matrix bereitstellender Wickelkopf (6), der eingerichtet ist, das Bandmaterial (2) auf den Wickelkern (3) zu wickeln und der einen Laser (4) aufweist, um die Polymer-Matrix mittels Laserbestrahlung (5) aufzuschmelzen und einen Stoffschluss zweier übereinanderliegender Lagen des Bandmaterials (2) zu erreichen, **dadurch gekennzeichnet, dass** der Wickelkern (3) ein Außenrohr (9), auf das das Bandmaterial (2) wickelbar ist, und ein darin angeordnetes Innenrohr (10) aufweist, und radial zwischen dem Außenrohr (9) und dem Innenrohr (10) wenigstens eine Wendel (11) vorhanden ist, die sich entlang zumindest eines axialen Abschnitts des Wickelkerns (3) erstreckt und einen von einem Fluid zur variothermen Temperierung des Außenrohres (9) durchströmbaren helikalen Strömungspfad (18) um die Wickelkernachse (8) definiert.

9. Vorrichtung nach Anspruch 8, **gekennzeichnet durch** eine Temperiereinrichtung (20), die eingerichtet ist, das Fluid wahlweise mit einer ersten Temperatur in einem ersten Temperaturbereich, insbesondere zwischen 120°C und 160°C, oder mit einer zweiten Temperatur in einem zweiten Temperaturbereich, insbesondere zwischen 60°C und 20°C bereitzustellen.

10. Vorrichtung nach Anspruch 8 oder 9, **dadurch gekennzeichnet, dass** der Wickelkern (3) während des Wickelns rotierbar ist.

11. Vorrichtung nach einem der Ansprüche 8 bis 10, **dadurch gekennzeichnet, dass** die Wendel (11) auf dem Außenumfang des Innenrohres (10) befestigt, insbesondere aufgeschweißt ist.

12. Vorrichtung nach einem der Ansprüche 8 bis 10, **dadurch gekennzeichnet, dass** die Wendel (11) einstückig mit dem Außenrohr (9) und/ oder mit dem Innenrohr (10) ist und gemeinsam mit dem Außenrohr (9) oder Innenrohr (10) mit einem additiven Herstellungsverfahren schichtweise hergestellt ist.

13. Vorrichtung nach einem der Ansprüche 8 bis 12, **dadurch gekennzeichnet, dass** der Wickelkern (3) wenigstens eine Fluidumlenkung (39, 61) in Strömungsrichtung am Ende des axialen Abschnitts oder jenseits dieses Endes aufweist, um das Fluid vom Innenrohr (10) zum helikalen Strömungspfad (18) oder umgekehrt umzulenken.

14. Vorrichtung nach einem der Ansprüche 8 bis 13, **gekennzeichnet durch** einen Fluidumlenker (58), der an einem einem Strömungseintritt des Fluids gegenüberliegenden axialen Ende des Wickelkerns (3) in der Art eines Stopfens in das Innenrohr (10) und in das Außenrohr (9) eingesetzt ist und dieses jeweils verschließt, und wenigstens einen Querkanal (61) aufweist, um einen Übergang des Fluids vom Innenrohr (10) zum helikalen Strömungspfad (18) oder umgekehrt zu schaffen.

15. Vorrichtung nach einem der Ansprüche 8 bis 14, **dadurch gekennzeichnet, dass** das Außenrohr (9) außenseitig mit einer verschleißfesten Beschichtung und/ oder innenseitig mit einer korrosions- und erosionshemmenden Beschichtung versehen ist.

## Claims

1. Method for the production of wound tubes (100) made of plastic, notably split tubes for wet rotor pumps, by means of winding a flat, fibre-reinforced tape material (2) having a thermoplastic or thermosetting polymer matrix onto a heated winding core (3) while the polymer matrix is melted by means of laser irradiation (5) to create a material bond between two layers of the tape material (2) lying on top of each other, **characterised in that** the winding core (3) having an outer tube (9) onto which the tape material (2) is wound, an inner tube (10) arranged within the outer tube (9), and for variothermic tempering of the outer tube (9) a fluid flows through the winding core (3) axially following at least one helical flow path (18) around the winding core axis (8), flow path (18) extending radially between the outer tube (9) and the inner tube (10) along at least one axial portion of the winding core (3).

2. Method according to claim 1, **characterised in that,** during winding, the fluid flows through the winding core (3) with a first temperature in a first temperature range, notably between 120°C and 200°C, and subsequently with a second temperature in a second temperature range, notably between 10°C and 80°C.

3. Method according to claim 1 or 2, **characterised in that** a tempering device (20) provides the fluid selectively with the first temperature or with the second temperature.

4. Method according to one of the preceding claims, **characterised in that,** during winding, the winding core (3) rotates around its longitudinal axis.

5. Method according to one of the preceding claims, **characterised in that** the fluid flows through the inner tube (10) in the axially opposite direction to the helical flow path (18), wherein the fluid is diverted from the inner tube (10) to the helical flow path (18) or vice versa by at least one fluid diversion (39, 61) that, in the flow direction, lies at the end of the axial portion or beyond this end.

6. Method according to claim 5, **characterised in that** the fluid initially flows through the inner tube (10) and then flows back through the helical flow path (18).

7. Method according to one of the preceding claims, **characterised in that** the wound tube (100), after the winding core (3) has cooled, is pushed to an axial end of the winding core (3) where it is cut for producing individual tube sections.

8. Device (1) for the production of tubes (100) made of plastic, notably split tubes for wet rotor pumps, having a heatable winding core (3) and a winding head (6) that supplies a flat, fibre-reinforced tape material (2) having a thermoplastic or thermosetting polymer matrix, the winding head (6) being configured to wind the tape material (2) onto the winding core (3) and comprising a laser (4) to melt the polymer matrix by means of laser irradiation (5), creating a material bond between two layers of the tape material (2) lying on top of each other, **characterised in that** the winding core (3) comprises an outer tube (9) onto which the tape material (2) can be wound and an inner tube (10) arranged within the outer tube (9) and **in that** at least one helix (11) is present radially between the outer tube (9) and the inner tube (10), the helix (11) extends along at least one axial portion of the winding core (3) and defines a helical flow path (18) around the winding core axis (8) along which a fluid can flow for variothermic tempering the outer tube (9).

9. Device according to claim 8, **characterised in that** a temperature control unit (20) that is configured to supply the fluid selectively with a first temperature in a first temperature range, notably between 120°C and 160°C, or with a second temperature in a second temperature range, notably between 60°C and 20°C.

10. Device according to claim 8 or 9, **characterised in that** the winding core (3) is rotatable during winding.

11. Device according to one of the claims 8 through 10, **characterised in that** the helix (11) is mounted on the outer circumference of the inner tube (10), notably by means of welding.

12. Device according to one of the claims 8 through 10, **characterised in that** the helix (11) forms one piece with the outer tube (9) and/or with the inner tube (10) and is produced in layers conjointly with the outer tube (9) or the inner tube (10) using an additive manufacturing method.

13. Device according to one of the claims 8 through 12, **characterised in that** the winding core (3) comprises at least one fluid diversion (39, 61) that, in the flow direction, lies at the end of the axial portion or beyond this end in order to divert the fluid from the inner tube (10) to the helical flow path (18) or vice versa.

14. Device according to one of the claims 8 through 13, **characterised by** a fluid diverter (58) being inserted into the inner tube (10) and the outer tube (9), in the manner of a plug, at one axial end of the winding core (3) that is opposite to the fluid inlet, thereby closing the inner tube (10) and the outer tube (9), the fluid diverter (58) comprising at least one transverse channel (61) to create a passage for the fluid from the inner tube (10) to the helical flow path (18) or vice versa.

15. Device according to one of the claims 8 through 14, **characterised in that** the outer tube (9) is coated on the outer side with a wear-resistant coating and/or on the inner side with a corrosion- and erosion-inhibiting coating.

## Revendications

1. Procédé de fabrication de tubes enroulés (100) en matière plastique, plus particulièrement de gaines pour pompes à rotor immergé, par enroulement d'un matériau en bande (2) plat renforcé par des fibres, avec une matrice polymère thermoplastique ou thermodurcissable, sur un noyau d'enroulement (3) chauffé, alors que la matrice polymère est fondue par rayonnement laser (5) pour une liaison de matière de deux couches superposées du matériau en bande (2), **caractérisé en ce que** le noyau d'enroulement (3) est chauffé par rayonnement laser (6), **en ce que** le noyau d'enroulement (3) présente un tube extérieur (9), sur lequel le matériau en bande (2) est enroulé, et un tube intérieur (10) disposé à l'intérieur de celui-ci, et que pour l'équilibrage de température variothermique du tube extérieur (9), un fluide traverse le noyau d'enroulement (3) axialement le long d'au moins une voie d'écoulement hélicoïdale (18) autour de l'axe (8) du noyau d'enroulement, qui s'étend radialement entre le tube extérieur (9) et le tube intérieur (10) le long d'au moins une section axiale du noyau d'enroulement (3).

2. Procédé selon la revendication 1, **caractérisé en ce que** le fluide traverse le noyau d'enroulement (3) lors de l'enroulement à une première température dans une première plage de températures, particulièrement entre 120°C et 200°C, puis à une deuxième température dans une deuxième plage de températures, particulièrement entre 10°C et 80°C.

3. Procédé selon la revendication 1 ou 2, **caractérisé en ce qu'un** dispositif de régulation de température (20) fournit le fluide au choix à la première température ou à la deuxième température.

4. Procédé selon l'une des revendications précédentes, **caractérisé en ce que** le noyau d'enroulement (3) tourne autour de son axe longitudinal pendant l'enroulement.

5. Procédé selon l'une quelconque des revendications précédentes, **caractérisé en ce que** le fluide s'écoule à travers le tube intérieur (10) dans une direction axialement opposée à la voie d'écoulement hélicoïdale (18), le fluide étant dévié du tube intérieur (10) vers la voie d'écoulement hélicoïdale (18) ou vice versa par au moins une déviation de fluide (39, 61) située dans la direction d'écoulement à l'extrémité de la section axiale ou au-delà de cette extrémité.

6. Procédé selon la revendication 5, **caractérisé en ce que** le fluide s'écoule à travers le tube intérieur (10) avant de revenir par la voie d'écoulement hélicoïdale (18).

7. Procédé selon l'une des revendications précédentes, **caractérisé en ce que** le tube enroulé (100), après refroidissement du noyau d'enroulement (3), est poussé vers une extrémité axiale du noyau d'enroulement (3) où il est coupé à longueur pour créer des tronçons.

8. Dispositif (1) de fabrication de tubes (100) en matière plastique, plus particulièrement de gaines pour pompes à rotor immergé, avec un noyau d'enroulement (3) pouvant être chauffé et une tête d'enroulement (6) fournissant un matériau en bande (2) plat renforcé par des fibres, avec une matrice polymère thermoplastique ou thermodurcissable, conçue pour enrouler le matériau en bande (2) sur le noyau d'enroulement (3) et présentant un laser (4) pour faire fondre la matrice polymère par rayonnement laser (5) et pour obtenir une fermeture de matière de deux couches superposées du matériau en bande (2), **caractérisé en ce que** le noyau d'enroulement (3) présente un tube extérieur (9), sur lequel le matériau en bande (2) peut être enroulé, et un tube intérieur (10) disposé dans celui-ci, et radialement entre le tube extérieur (9) et le tube intérieur (10) est présente au moins une spirale (11) s'étendant le long d'au moins une section axiale du noyau d'enroulement (3) et définissant une voie d'écoulement hélicoïdale (18) autour de l'axe (8) du noyau d'enroulement, pouvant être traversé par un fluide pour l'équilibrage de température variothermique du tube extérieur (9).

9. Dispositif selon la revendication 8, **caractérisé par** un dispositif de régulation de température (20) conçu pour fournir le fluide au choix à une première température dans une première plage de températures, particulièrement entre 120°C et 160°C, ou à une deuxième température dans une deuxième plage de températures, particulièrement entre 60°C et 20°C.

10. Dispositif selon les revendication 1 ou 9, **caractérisé en ce que** le noyau d'enroulement (3) peut être mis en rotation pendant l'enroulement.

11. Dispositif selon l'une des revendications 8 à 10, **caractérisé en ce que** la spirale (11) est fixée, plus particulièrement soudée, sur la périphérie extérieure du tube intérieur (10).

12. Dispositif selon l'une des revendications 8 à 10, **caractérisé en ce que** la spirale (11) est d'une seule pièce avec le tube extérieur (9) et/ou avec le tube intérieur (10) et est fabriquée par couches avec le tube extérieur (9) ou le tube intérieur (10) par un procédé de fabrication additive.

13. Dispositif selon l'une quelconque des revendications 8 à 12, **caractérisé en ce que** le noyau d'enroulement (3) comprend au moins une déviation de fluide (39, 61) dans le sens de l'écoulement à l'extrémité de la section axiale ou au-delà de cette extrémité, pour dévier le fluide du tube intérieur (10) vers la voie d'écoulement hélicoïdale (18) ou inversement.

14. Dispositif selon l'une quelconque des revendications 8 à 13, **caractérisé par** un déflecteur de fluide (58) inséré à la manière d'un bouchon dans le tube intérieur (10) et dans le tube extérieur (9) à une extrémité axiale du noyau d'enroulement (3) opposée à une entrée d'écoulement du fluide, et fermant respectivement ces tubes, et comportant au moins un canal transversal (61) pour assurer un transfert du fluide du tube intérieur (10) vers la voie d'écoulement hélicoïdale (18) ou inversement.

15. Dispositif selon l'une des revendications 8 à 14, **caractérisé en ce que** le tube extérieur (9) est pourvu, côté extérieur, d'un revêtement résistant à l'usure et/ou, côté intérieur, d'un revêtement inhibant la corrosion et l'érosion.
